# EUROPEAN PATENT APPLICATION

(11) **EP 4 679 260 A1**
(43) Date of publication of application: **14.01.2026**
(21) Application number: 23929417.6
(22) Date of filing: 31.03.2023
(51) Int. Cl.: G06F 8/65

(54) **UPGRADE METHOD AND APPARATUS, AND VEHICLE**

(71) Applicant: Shenzhen Yinwang Intelligent Technologies Co., Ltd., Shenzhen, Guangdong 518110 (CN)
(72) Inventor: YAN, Haidong, Shenzhen, Guangdong 518129 (CN); LIU, Qiong, Shenzhen, Guangdong 518129 (CN); ZHU, Cheng, Shenzhen, Guangdong 518129 (CN); LI, Zhen, Shenzhen, Guangdong 518129 (CN)
(74) Representative: Gill Jennings & Every LLP
(86) International application number: PCT/CN2023/085546
(87) International publication number: WO 2024/197832

(57) **Abstract**

An update method and apparatus, and a vehicle, relate to the field of device update technologies. The method includes: A first device obtains a first update task. When the first device meets a first update condition, the first device performs first OTA update on a first component based on a first update package in the first update task, where the first update condition includes at least a condition associated with the first component. When the first OTA update fails, the first device determines whether the first device meets a second update condition, where the second update condition does not include a condition associated with the first component and/or a second component, and the second component is a component that causes the first OTA update to fail. When the first device meets the second update condition, the first device performs second OTA update on the first component based on a second update package. The method improves efficiency of repairing the first device, and improves user experience.

## Description

### TECHNICAL FIELD

This application relates to the field of device update technologies, and in particular, to an update method and apparatus, and a vehicle.

### BACKGROUND

With development of a vehicle intelligence networking technology and an over the air (over the air, OTA) technology, online update on vehicle components by using the OTA technology (OTA update for short below) can be implemented in an increasing quantity of vehicles. Specifically, an OTA system of a vehicle may download, by using an OTA server, update packages for components, and then perform data flashing on the components based on the update packages, to update the components. Before the vehicle performs the OTA update, the OTA system of the vehicle needs to detect whether functions of core components (for example, a battery and a telematics box (telematics box, T-Box)) for vehicle update are normal, and detect whether the vehicle meets an update condition for the OTA update.

During the OTA update of the vehicle, if the core component is abnormal (for example, the battery is faulty or the T-box is restarted), data flashing of a system of a to-be-updated component is interrupted, or an upper-layer application of the to-be-updated component is damaged. As a result, a system function of the to-be-updated component is damaged and cannot be normally used, and the OTA update of the vehicle fails. In addition, even if the core component is recovered to be normal, because the system function of the to-be-updated component is damaged and cannot be normally used, the OTA system of the vehicle cannot accurately detect whether the vehicle still meets the update condition for the OTA update, and cannot continue to perform the OTA update on the vehicle. Consequently, the vehicle whose OTA update fails cannot be repaired.

In a conventional technology, when OTA update of the vehicle fails and the vehicle cannot be repaired, operation service personnel of the OTA update need to arrive at a vehicle site to provide technical support, or a user tows the vehicle to a service shop of the OTA update by using a trailer, to repair or replace the component, so as to repair the vehicle whose OTA update fails, and recover a normal use function of the vehicle. This is time and labor consuming, and the vehicle whose OTA update fails cannot be quickly and conveniently repaired.

### SUMMARY

This application provides an update method and apparatus, and a vehicle, so that when a first device (for example, a vehicle) fails to perform first OTA update on a first component of the first device based on a first update condition, the first device can perform second OTA update (or referred to as repair and update) on the first component based on a second update condition. The second update condition does not include a condition associated with the first component and/or a component that causes the first OTA update to fail. In this way, the first component of the first device can be quickly and conveniently repaired and updated.

To achieve the foregoing objective, this application uses the following technical solutions.

According to a first aspect, an update method is provided, and the method includes: The first device obtains a first update task, where the first update task includes a first update package, and the first update package is used for over the air OTA update on a first component of a first device; when the first device meets a first update condition, the first device performs first OTA update on the first component based on the first update package, where the first update condition includes at least a condition associated with the first component; when the first OTA update fails, the first device determines whether the first device meets a second update condition, where the second update condition does not include a condition associated with the first component and/or a second component, and the second component is a component that causes the first OTA update to fail; and when the first device meets the second update condition, the first device performs second OTA update on the first component based on a second update package, where the second update package is associated with the first update package.

In the method, after the first device fails to perform the first OTA update on the first component, the first device can perform the second OTA update on the first component based on the second update condition. In other words, when the first component and/or the second component are/is damaged, or detection results/ a detection result of the first component and/or the second component cannot be obtained, the first device can perform the second OTA update on the first component, so that the first component of the first device can be quickly repaired and updated, to improve efficiency of repairing the first component, and improve user experience.

With reference to the first aspect, in an optional implementation, after the first OTA update fails and before the second OTA update is performed, the method further includes at least one of the following: The first device does not perform detection on the first component; the first device does not perform detection on the second component; the first device performs detection on the first component and ignores a detection result obtained by performing detection on the first component; and the first device performs detection on the second component and ignores a detection result obtained by performing detection on the second component.

In this implementation, the second update condition does not include the condition associated with the first component and/or the second component. Therefore, when the first device performs a detection step before the second OTA update is performed, the first device may not perform detection on the first component and/or the second component, or perform detection on the first component and/or the second component but ignore detection results/a detection result. In this way, whether the first device meets the second update condition can be quickly determined, to improve efficiency of performing the second OTA update on the first component.

With reference to the first aspect, in an optional implementation, after the first OTA update fails, the method further includes: The first device obtains first indication information, where the first indication information indicates to perform the second OTA update based on the second update condition. In this implementation, after obtaining the first indication information, the first device may perform, in response to the first indication information, the second OTA update based on the second update condition. In this way, efficiency of performing the second OTA update on the first component by the first device can be ensured.

With reference to the first aspect, in an optional implementation, the second update condition is determined based on status information of the first component and/or the second component, and the status information of the first component and/or the second component is associated with failure of the first OTA update. In this way, the second update condition can be accurately determined, so that when the second update condition is met, the first device can perform the second OTA update on the first component, to repair the first component.

With reference to the first aspect, in an optional implementation, after the first OTA update fails and before the second OTA update is performed, the method further includes: The first device wakes up a third component, where the third component includes at least a component associated with performing the second OTA update on the first component. In this implementation, before the second OTA update is performed, the first device may further wake up the component associated with performing the second OTA update on the first component. In this way, the entire first device does not need to be woken up, and power consumption of the first device can be further reduced.

With reference to the first aspect, in an optional implementation, that the first device wakes up the third component includes: The first device receives a wake-up instruction, where the wake-up instruction is used to wake up the third component; and the first device wakes up the third component in response to the wake-up instruction. In this implementation, when the first device cannot wake up the third component because the first OTA update on the first component fails, the first device can receive the wake-up instruction sent by the OTA server, and wake up the third component in response to the wake-up instruction. In this way, a success rate of waking up the third component by the first device can be improved.

With reference to the first aspect, in an optional implementation, the wake-up instruction is determined based on status information of the third component. In this way, the wake-up instruction can be accurately determined, to further improve the success rate of waking up the third component.

With reference to the first aspect, in an optional implementation, an update type corresponding to the second OTA update is forcible update. In this implementation, when the second update condition is met, the first device can forcibly perform the second OTA update on the first component without user authorization and agree. In this way, it can be ensured that the first device can perform the second OTA update on the first component based on the second update condition, to improve a success rate of performing the second OTA update on the first component.

According to a second aspect, an update method is provided, and the method includes: The OTA server sends a first update task, where the first update task includes a first update package, and the first update package is used to perform OTA update on a first component of a first device; and when the first device fails to perform first OTA update on the first component based on the first update package, the OTA server sends first indication information, where the first indication information indicates the first device to perform second OTA update based on a second update condition, the second update condition does not include a condition associated with the first component and/or a second component, the second component is a component that causes the first OTA update to fail, the second OTA update is to perform update on the first component based on a second update package, and the second update package is associated with the first update package.

In the method, the OTA server can send the first indication information to the first device, to indicate the first device to perform the second OTA update based on the second update condition, where the second update condition does not include the condition associated with the first component and/or the second component. In this way, when the second update condition is met, the first device can perform the second OTA update on the first component, to repair the first component.

With reference to the second aspect, in an optional implementation, that the first device performs the second OTA update based on the second update condition includes at least one of the following: The first device does not perform detection on the first component; the first device does not perform detection on the second component; the first device performs detection on the first component and ignores a detection result obtained by performing detection on the first component; and the first device performs detection on the second component and ignores a detection result obtained by performing detection on the second component.

With reference to the second aspect, in an optional implementation, before the first indication information is sent, the method further includes: The OTA server obtains status information of the first component and/or the second component, where the status information of the first component and/or the second component is associated with failure of the first OTA update; and the OTA server determines the second update condition based on the status information of the first component and/or the second component.

With reference to the second aspect, in an optional implementation, that the OTA server obtains the status information of the first component and/or the second component includes: The OTA server receives one or more of log information of the first OTA update and user feedback information; and the OTA server determines the status information of the first component and/or the second component based on one or more of the log information and the user feedback information.

With reference to the second aspect, in an optional implementation, after the first OTA update fails and before the second OTA update is performed, the method further includes: The OTA server sends a wake-up instruction, where the wake-up instruction is used to wake up a third component, and the third component includes at least a component associated with performing the second OTA update on the first component.

With reference to the second aspect, in an optional implementation, before the OTA server sends the wake-up instruction, the method further includes: The OTA server obtains status information of the third component; and the OTA server determines the wake-up instruction based on the status information of the third component.

With reference to the second aspect, in an optional implementation, the OTA server obtains the status information of the third component includes: The OTA server receives one or more of the log information of the first OTA update and the user feedback information; and the OTA server determines the status information of the third component based on one or more of the log information and the user feedback information.

With reference to the second aspect, in an optional implementation, an update type corresponding to the second OTA update is forcible update.

According to a third aspect, an update method is provided, and the method includes: The first device sends first prompt information, where the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition includes at least a condition associated with the first component, the second update condition does not include a condition associated with the first component and/or a second component, and the second component is a component that causes the first OTA update to fail; the first device receives first response information from the user, where the first response information indicates whether the user accepts the second update condition; and when the user accepts the second update condition, after the first OTA update fails, the first device performs the second OTA update on the first component based on the second update condition.

In the method, the first device can send the first prompt information to query the user who uses the first device whether to accept the second update condition. In this way, security of performing, by the first device, the second OTA update on the first component based on the second update condition can be improved.

With reference to the third aspect, in an optional implementation, after the first OTA update fails, the method further includes: The first device sends second prompt information, where the second prompt information is used to query the user whether to accept performing the second OTA update on the first component based on the second update condition; the first device receives second response information from the user, where the second response information indicates whether the user accepts performing the second OTA update on the first component based on the second update condition; and when the user accepts performing the second OTA update on the first component based on the second update condition, the first device performs the second OTA update on the first component based on the second update condition.

In this implementation, after the first OTA update fails, the first device may further send the second prompt information, to query the user whether to accept performing the second OTA update on the first component based on the second update condition. In this way, the security of performing the second OTA update on the first component by the first device can be further improved.

With reference to the third aspect, in an optional implementation, after the first OTA update fails, the method further includes: The first device obtains location information of the first device; when a first distance is greater than a first threshold, the first device sends the second prompt information, where the second prompt information is used to query the user whether to accept performing the second OTA update on the first component based on the second update condition, the first distance is associated with the location information, the first distance is a distance between the first device and an OTA update center, and the OTA update center is configured to perform the second OTA update on the first component; the first device receives the second response information from the user, where the second response information indicates whether the user accepts performing the second OTA update on the first component based on the second update condition; and when the user accepts performing the second OTA update on the first component based on the second update condition, the first device performs the second OTA update on the first component based on the second update condition.

In this implementation, the first device can determine, based on the location information of the first device and the distance between the first device and the OTA update center, whether to send the second prompt information. When the distance between the first device and the OTA update center is greater than the first threshold, the first device sends the second prompt information. In this way, validity of the second prompt information can be improved, and efficiency of performing the second OTA update on the first component can be improved.

With reference to the third aspect, in an optional implementation, after the first OTA update fails, the method further includes: The first device obtains first indication information, where the first indication information indicates to perform the second OTA update based on the second update condition.

With reference to the third aspect, in an optional implementation, that the first device performs the second OTA update on the first component based on the second update condition includes: When the first device meets the second update condition, the first device performs the second OTA update on the first component based on a second update package, where the second update package is associated with the first update package.

According to a fourth aspect, an update method is provided, and the method includes: The first device receives and displays first prompt information, where the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition includes at least a condition associated with the first component, the second update condition does not include a condition associated with the first component and/or a second component, and the second component is a component that causes the first OTA update to fail; the first device receives first response information from the user, where the first response information indicates whether the user accepts the second update condition; and when the user accepts the second update condition, after the first OTA update fails, the first device performs the second OTA update on the first component based on the second update condition.

With reference to the fourth aspect, in an optional implementation, after the first OTA update fails, the method further includes: The first device receives and displays second prompt information, where the second prompt information is used to query the user whether to accept performing the second OTA update on the first component based on the second update condition; the first device receives second response information from the user, where the second response information indicates whether the user accepts performing the second OTA update on the first component based on the second update condition; and when the user accepts performing the second OTA update on the first component based on the second update condition, the first device performs the second OTA update on the first component based on the second update condition.

With reference to the fourth aspect, in an optional implementation, after the first OTA update fails, the method further includes: The first device obtains location information of the first device; when a first distance is greater than a first threshold, the first device receives and displays the second prompt information, where the second prompt information is used to query the user whether to accept performing the second OTA update on the first component based on the second update condition, the first distance is associated with the location information, the first distance is a distance between the first device and an OTA update center, and the OTA update center is configured to perform the second OTA update on the first component; the first device receives second response information from the user, where the second response information indicates whether the user accepts performing the second OTA update on the first component based on the second update condition; and when the user accepts performing the second OTA update on the first component based on the second update condition, the first device performs the second OTA update on the first component based on the second update condition.

According to a fifth aspect, an update method is provided, and the method includes: The OTA server sends first prompt information, where the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition includes at least a condition associated with the first component, the second update condition does not include a condition associated with the first component and/or a second component, and the second component is a component that causes the first OTA update to fail; and when the user accepts the second update condition, the OTA server sends first indication information after the first OTA update fails, where the first indication information indicates the first device to perform the second OTA update based on the second update condition.

With reference to the fifth aspect, in an optional implementation, after the first OTA update fails and before the first indication information is sent, the method further includes: The OTA server sends second prompt information, where the second prompt information is used to query the user whether to accept performing the second OTA update on the first component based on the second update condition.

According to a sixth aspect, an update apparatus is provided, and the apparatus includes an obtaining module and a processing module, where the obtaining module is configured to obtain a first update task, where the first update task includes a first update package, and the first update package is used for over the air OTA update on a first component of a first device; the processing module is configured to: when the first device meets a first update condition, perform first OTA update on the first component based on the first update package, where the first update condition includes at least a condition associated with the first component; the processing module is further configured to: when the first OTA update fails, determine whether the first device meets a second update condition, where the second update condition does not include a condition associated with the first component and/or a second component, and the second component is a component that causes the first OTA update to fail; and the processing module is further configured to: when the first device meets the second update condition, perform second OTA update on the first component based on a second update package, where the second update package is associated with the first update package.

With reference to the sixth aspect, in an optional implementation, after the first OTA update fails and before the second OTA update is performed, the processing module is specifically configured to perform at least one of the following: skipping performing detection on the first component, skipping performing detection on the second component, performing detection on the first component and ignoring a detection result obtained by performing detection on the first component, and performing detection on the second component and ignoring a detection result obtained by performing detection on the second component.

With reference to the sixth aspect, in an optional implementation, after the first OTA update fails, the obtaining module is further configured to obtain first indication information, where the first indication information indicates to perform the second OTA update based on the second update condition.

With reference to the sixth aspect, in an optional implementation, after the first OTA update fails and before the second OTA update is performed, the processing module is further configured to wake up a third component, where the third component includes at least a component associated with performing the second OTA update on the first component.

With reference to the sixth aspect, in an optional implementation, the obtaining module is further configured to receive a wake-up instruction. The processing module is further configured to wake up the third component in response to the wake-up instruction.

According to a seventh aspect, an update apparatus is provided, and the apparatus includes a sending module. Specifically, the sending module is configured to send a first update task, where the first update task includes a first update package, and the first update package is used to perform OTA update on a first component of a first device. The sending module is further configured to: when the first device fails to perform first OTA update on the first component based on the first update package, send first indication information, where the first indication information indicates the first device to perform second OTA update based on a second update condition, the second update condition does not include a condition associated with the first component and/or a second component, the second component is a component that causes the first OTA update to fail, the second OTA update is to perform update on the first component based on a second update package, and the second update package is associated with the first update package.

With reference to the seventh aspect, in an optional implementation, the apparatus further includes an obtaining module and a processing module. The obtaining module is configured to obtain status information of the first component and/or the second component, where the status information of the first component and/or the second component is associated with failure of the first OTA update; and the processing module is configured to determine the second update condition based on the status information of the first component and/or the second component.

With reference to the seventh aspect, in an optional implementation, the obtaining module is further configured to obtain status information of a third component. The processing module is further configured to determine a wake-up instruction based on the status information of the third component. The sending module is further configured to send the wake-up instruction.

According to an eighth aspect, a vehicle is provided, including an update apparatus. The update apparatus is configured to perform the method according to the first aspect and any optional method of the first aspect, or the update apparatus is configured to perform the method according to the third aspect and any optional method of the third aspect, or the update apparatus is configured to perform the method according to the fourth aspect and any optional method of the fourth aspect.

According to a ninth aspect, an electronic device is provided, including a memory and one or more processors, where the memory is coupled to the processor. The memory stores computer program code, and the computer program code includes computer instructions. When the computer instructions are executed by the processor, the electronic device is enabled to perform the method according to the first aspect and any optional method of the first aspect, or the electronic device is enabled to perform the method according to the second aspect and any optional method of the second aspect, or the electronic device is enabled to perform the method according to the third aspect and any optional method of the third aspect, or the electronic device is enabled to perform the method according to the fourth aspect and any optional method of the fourth aspect, or the electronic device is enabled to perform the method according to the fifth aspect and any optional method of the fifth aspect.

According to a tenth aspect, a computer-readable storage medium is provided, including computer instructions. When the computer instructions are run on an electronic device, the electronic device is enabled to perform the method according to the first aspect and any optional method of the first aspect, or the electronic device is enabled to perform the method according to the second aspect and any optional method of the second aspect, or the electronic device is enabled to perform the method according to the third aspect and any optional method of the third aspect, or the electronic device is enabled to perform the method according to the fourth aspect and any optional method of the fourth aspect, or the electronic device is enabled to perform the method according to the fifth aspect and any optional method of the fifth aspect.

According to an eleventh aspect, a computer program product is provided. When the computer program product is run on a computer, the computer is enabled to perform the method according to the first aspect and any optional method of the first aspect, or the computer is enabled to perform the method according to the second aspect and any optional method of the second aspect, or the computer is enabled to perform the method according to the third aspect and any optional method of the third aspect, or the computer is enabled to perform the method according to the fourth aspect and any optional method of the fourth aspect; or the computer is enabled to perform the fifth aspect and any optional method of the fifth aspect.

It may be understood that for beneficial effects that can be achieved by the update method in the third aspect to the fifth aspect, the update apparatus in the sixth aspect, the update apparatus in the seventh aspect, the vehicle in the eighth aspect, the electronic device in the ninth aspect, the computer-readable storage medium in the tenth aspect, and the computer program product in the eleventh aspect, refer to beneficial effects in any one of the first aspect and the possible design of the first aspect. Details are not described herein again.

### BRIEF DESCRIPTION OF DRAWINGS

FIG. 1 is a diagram in which OTA update of a vehicle fails according to a conventional technology;
FIG. 2 is a diagram of an application scenario according to an embodiment of this application;
FIG. 3A and FIG. 3B are a diagram of an architecture of an application scenario according to an embodiment of this application;
FIG. 4 is a diagram in which update of a vehicle function system fails according to an embodiment of this application;
FIG. 5 is a schematic flowchart 1 of an update method according to an embodiment of this application;
FIG. 6 is a diagram 1 of creating a second update task by an OTA server according to an embodiment of this application;
FIG. 7 is a diagram 2 of creating a second update task by an OTA server according to an embodiment of this application;
FIG. 8A and FIG. 8B are a schematic flowchart of a second OAT update method according to an embodiment of this application;
FIG. 9 is a diagram of a scenario of waking up a third component according to an embodiment of this application;
FIG. 10 is a schematic flowchart 2 of an update method according to an embodiment of this application;
FIG. 11 is a diagram 1 that displays first prompt information according to an embodiment of this application;
FIG. 12 is a diagram 2 that displays first prompt information according to an embodiment of this application;
FIG. 13 is a diagram 1 that displays second prompt information according to an embodiment of this application;
FIG. 14 is a diagram 2 that displays second prompt information according to an embodiment of this application;
FIG. 15 is a schematic flowchart 3 of an update method according to an embodiment of this application;
FIG. 16 is a schematic flowchart 4 of an update method according to an embodiment of this application;
FIG. 17 is a diagram 1 of a structure of an update apparatus according to an embodiment of this application;
FIG. 18 is a diagram 2 of a structure of an update apparatus according to an embodiment of this application; and
FIG. 19 is a diagram of a composition of a chip system according to an embodiment of this application.

### DESCRIPTION OF EMBODIMENTS

In descriptions of this application, unless otherwise specified, the character "/" indicates that associated objects are in an "or" relationship. For example, A/B may indicate A or B. The term "and/or" in this application merely describes an association relationship between associated objects and indicates that three relationships may exist. For example, A and/or B may indicate three cases: Only A exists, both A and B exist, or only B exists, where A and B may be singular or plural. In addition, in the descriptions of this application, unless otherwise specified, "a plurality of" means two or more than two. At least one of the following items (pieces) or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

With development of a vehicle intelligence networking technology and an over the air (over the air, OTA) technology, in increasing vehicles, an update package can be downloaded from an OTA server by using the OTA technology, to perform online update on a component in a vehicle based on the update package. For example, an OTA technology may be used to update (OTA update for short below) an electronic controller unit (electronic controller unit, ECU) like a battery management system (battery management system, BMS), or a motor control unit (motor control unit, MCU) of the vehicle. In this way, vehicle update efficiency and user experience can be improved through OTA update, and update costs can be reduced.

However, each time the vehicle performs the OTA update (including the OTA update started for the first time and continuous update started after the OTA update is recovered from an exception), to ensure security of the OTA update of the vehicle, an OTA system of the vehicle needs to ensure that a function of a core component (for example, a battery, a telematics box (telematics Box, T-Box), or a vehicle control unit (vehicle control unit, VCU)) for the vehicle update is normal. For example, the OTA system of the vehicle needs to ensure that a power supply function, a hibernation wake-up function, and a power-on (or referred to as enabling a high voltage, namely, outputting a power voltage) function of the battery are normal, and ensure that a networking function and a communication function of the T-box are normal. In addition, the OTA system of the vehicle further needs to detect whether the vehicle meets an update condition of the OTA update, to ensure that the vehicle performs the OTA update when the vehicle meets the update condition of the OTA update.

During the OTA update of the vehicle, if the core component is abnormal (for example, the battery is faulty or the T-box is restarted), data flashing of a system of a to-be-updated component is interrupted, or an upper-layer application of the to-be-updated component is damaged. As a result, a system function of the to-be-updated component is damaged and cannot be normally used. In addition, even if the core component is recovered to be normal, because the system function of the to-be-updated component is damaged and cannot be normally used, the OTA system of the vehicle cannot determine whether the to-be-updated component meets the update condition, that is, the OTA system of the vehicle cannot accurately detect whether the vehicle still meets the update condition of the OTA update, and cannot perform the OTA update (repair and update) of the vehicle again. Consequently, the vehicle whose OTA update fails cannot be repaired.

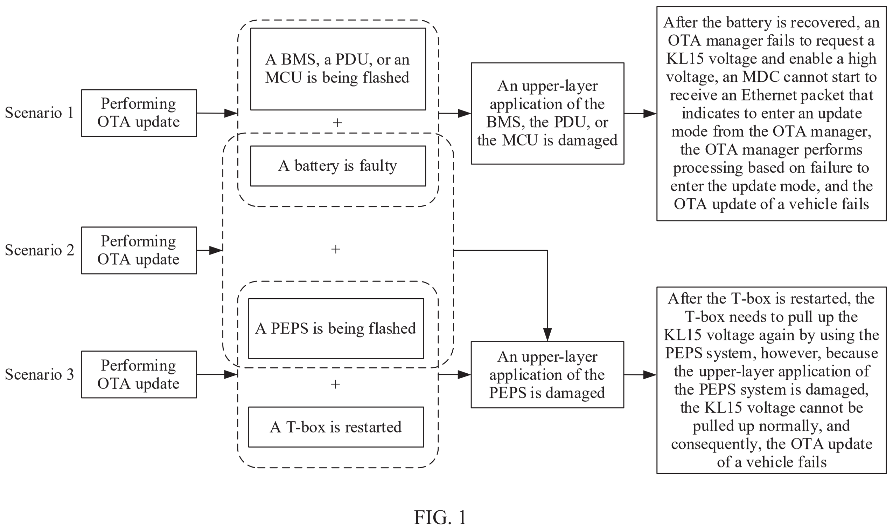

For example, FIG. 1 is a diagram of an application scenario in which OTA update of a vehicle fails according to a conventional technology.

As shown in Scenario 1 in FIG. 1, an example in which the OTA update is performed on a BMS, a PDU, or an MCU of the vehicle is used. In a process in which the vehicle performs data flashing on the BMS, the PDU, or the MCU, if a battery is faulty, data flashing is interrupted, and an upper-layer application of the BMS, the PDU, or the MCU is damaged. Even if the battery is recovered, a main control program module (for example, OTA manger) in an OTA system of the vehicle fails to request a wake-up voltage (or may be referred to as a KL15 voltage) and request a power voltage (or may be referred to as enable a high voltage) because a system function of the BMS, PDU, or MCU is damaged and cannot be used normally. Because a multiple domain controller (multiple domain controller, MDC) needs to be in a high voltage state (that is, needs to be in a power voltage state) for start, the MDC cannot start to receive an Ethernet packet that indicates to enter an update mode from the OTA manager. As a result, the OTA manager needs to perform processing based on information indicating failure to enter the update mode, and the OTA update of the vehicle fails.

As shown in Scenario 2 and Scenario 3 in FIG. 1, an example in which the OTA update is performed on a passive entry passive start (passive entry passive start, PEPS) system of the vehicle is used. In a process in which the vehicle performs data flashing on the PEPS system, if the battery is faulty or a T-box is restarted, the data flashing is interrupted, and an upper-layer application of the PEPS system is damaged. Even if the battery is recovered or the T-box is restarted, the T-box needs to pull up the KL15 voltage again by using the PEPS system. However, because the upper-layer application of the PEPS system is damaged, the KL15 voltage cannot be pulled up normally. Therefore, the T-box cannot be normally used, and the OTA update of the vehicle fails.

In a conventional technology, when the OTA update of the vehicle fails, and the system function of the to-be-updated component is damaged and cannot be used normally, operation service personnel of the OTA update usually need to arrive at a vehicle site to provide technical support (for example, perform professional problem check and vehicle repair), or a user (for example, with the help of a manufacturer) tows the vehicle to a service shop (for example, an after-sale service station of the vehicle or an authorized maintenance point corresponding to the vehicle) that provides the OTA update, to repair or replace the component, so as to repair the vehicle whose OTA update fails, and recover a normal use function of the vehicle. This is time and labor consuming, and the vehicle whose OTA update fails cannot be quickly and conveniently repaired.

To resolve the foregoing problem, an embodiment of this application provides an update method. According to the method provided in this embodiment, when a first device (for example, the vehicle) fails to perform first OTA update on a first component based on a first update condition, the first device can determine whether the first device meets a second update condition. When the first device meets the second update condition, second OTA update is performed on the first component, to repair the first device. The second update condition does not include a condition associated with the first component and/or a second component, and the second component is a component that causes the first OTA update to fail. In this way, when the first component and/or the second component are/is damaged, or detection results/a detection result of the first component and/or the second component cannot be obtained, the first device can perform the second OTA update (namely, repair and update) on the first component of the first device, so that the first device whose OTA update fails can be quickly repaired, to improve efficiency of repairing the first device, and improve user experience.

For example, the first device is the vehicle, and the first component is the PEPS in the vehicle. That the vehicle performs update on the PEPS in the method provided in this embodiment of this application may include: First, the vehicle obtains a first update task, where the first update task includes a first update package used to perform the OTA update on the PEPS, and the first update package may include OTA update data used to perform data flashing on the PEPS.

Then, when the first update condition is met, the vehicle performs the first OTA update on the PEPS based on the first update package. The first update condition may include a condition associated with the PEPS, for example, an enabled update authorization state of the PEPS, or a normal KL15 voltage pull-up state of the PEPS. The first update condition may further include a condition associated with the OTA system, a condition associated with vehicle safety, and the like. For example, a PEPS update package is in position, the PEPS update package passes verification, a vehicle mode is an update mode, a vehicle gear is in a P (P) gear, an ACC gear is in an OFF gear, a high-voltage charging status is uncharged, and battery power meets an update requirement.

The vehicle fails to perform the first OTA update on the PEPS, for example, the first OTA update on the PEPS fails due to a battery fault. In this case, it may be determined whether the vehicle meets the second update condition, where the second update condition does not include a condition associated with the PEPS and/or a component (for example, the battery) that causes the first OTA update on the PEPS to fail (for example, the enabled update authorization state of the PEPS, the normal KL15 voltage pull-up state of the PEPS, or the battery power that meets the update requirement). Therefore, the second update condition may include: The update package is in position, the update package passes the verification, the vehicle mode is the update mode, the vehicle gear is in the P (P) gear, the ACC gear is in the OFF gear, and the like.

Finally, when the vehicle meets the second update condition, the vehicle performs the second OTA update on the PEPS based on the second update package. The second update package is associated with the first update package. In this way, when the first OTA update on the PEPS fails, the vehicle can perform the second OTA update on the PEPS based on the second update condition, to repair the PEPS.

The following describes solutions provided in embodiments of this application with reference to the accompanying drawings.

The update method provided in embodiments of this application may be applied to a scenario in which an electronic device like the first device performs the OTA update. The following describes the update method provided in embodiments of this application by using an example in which the first device is a vehicle. The vehicle in embodiments of this application may be an intelligent vehicle, a truck, a motorcycle, a bus, a lawn mower, an entertainment vehicle, a playground vehicle, a construction device, a tram, a golf cart, a trolley, or the like. A specific type of the vehicle is not limited in embodiments of this application.

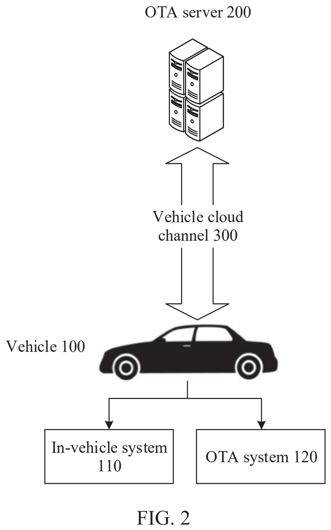

Specifically, FIG. 2 is a diagram of an application scenario according to an embodiment of this application. As shown in FIG. 2, an application scenario in which the OTA update is performed on the vehicle is used as an example. In the application scenario, a vehicle 100 and an OTA server 200 are included. The vehicle 100 includes an in-vehicle system 110 and an OTA system 120. The OTA system 120 may be configured to: obtain an update task, and update a component in the in-vehicle system 110 based on the update task.

The OTA server 200 may be, for example, an OTA management platform. The OTA server 200 may be configured to: create an update task, determine an update package, determine an update condition, and the like, and may send the update task, the update package, the update condition, and the like to the vehicle 100.

A communication connection may be established between the vehicle 100 and the OTA server 200 through a vehicle cloud channel 300, to establish a networking communication link used to implement an OTA function. The vehicle cloud channel 300 may include, for example, an instruction channel for OTA task information, and a data transmission channel for downloading an update package.

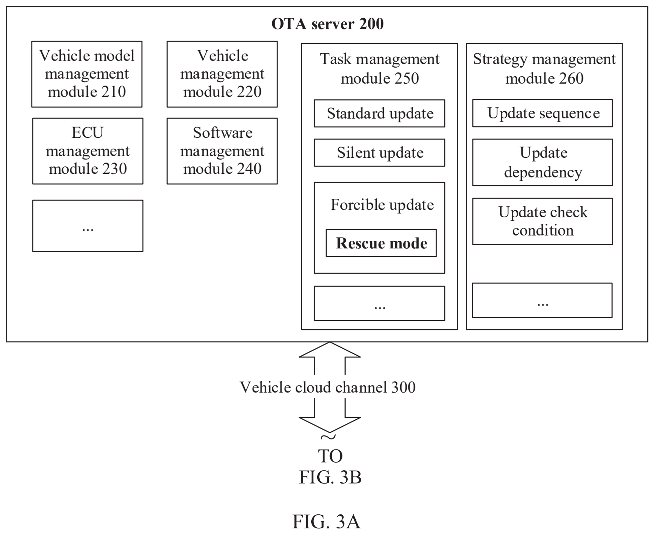

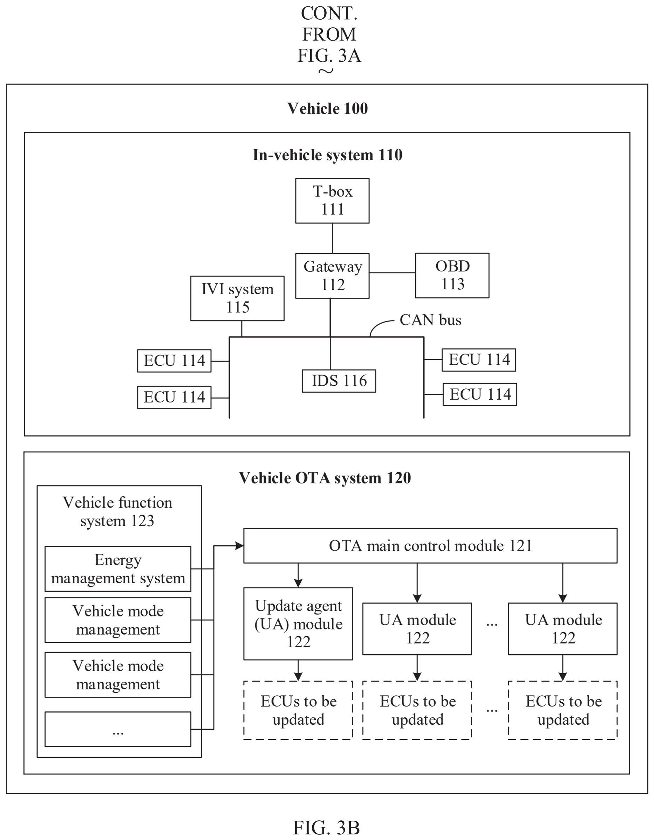

FIG. 3A and FIG. 3B are a diagram of an architecture of an application scenario according to an embodiment of this application. FIG. 3A and FIG. 3B show components included in the in-vehicle system 110. The in-vehicle system 110 may include a T-box 111, a gateway (or referred to as an in-vehicle gateway) 112, an on-board diagnostics (on-board diagnostics, OBD) 113, an ECU 114, an in-vehicle infotainment (in-vehicle infotainment, IVI) system 115, an intrusion detection system (intrusion detection system, IDS) 116, and the like. The components in the in-vehicle system 110 may be connected to each other through a controller area network (controller area network, CAN) bus. The ECU 114 may be a control unit with different functions. For example, the ECU 114 may be a cockpit domain controller (cockpit domain controller, CDC), an inertial measurement unit (inertial measurement unit, IMU), a mobile data center (mobile data center, MDC), or a VCU.

The T-box 111 may have a capability of communicating with an external device of the vehicle 100 and an internal device of the vehicle 100. The peripheral device of the vehicle 100 may be described as a device outside the vehicle 100.

The gateway 112 is a core component of the vehicle 100. The gateway 112 may route packet data on the CAN bus in different networks.

The OBD 113 may have a capability of monitoring a running status of the vehicle, and generate a fault code when a problem occurs on the vehicle.

The ECU 114 may be a micro-computer controller of the vehicle 100, and may have a capability of executing a preset control function. For example, the ECU 114 may be configured to: control an engine to run, and protect vehicle safety.

The IVI system 115 may be an infotainment system of the vehicle 100.

The IDS 116 may have a capability of diagnosing a vehicle fault, for example, detecting whether the packet data transmitted on the CAN bus is abnormal. The IDS 116 may be deployed in an internal component of the vehicle, for example, may be deployed in the T-box 111, the gateway 112, the MDC, the CDC, or the VCU.

It should be understood that the architecture of the in-vehicle system 110 shown in FIG. 3A and FIG. 3B is used as an example, and is not intended to limit the technical solutions of this application. A person skilled in the art should understand that, in a specific implementation process, the in-vehicle system 110 may further include another device, and a quantity of gateways and a quantity of ECUs may also be determined based on a specific requirement.

In some implementations, each component of the in-vehicle system 110 in FIG. 3A and FIG. 3B in this embodiment of this application, for example, the T-box 111, the gateway 112, the ECU 114, or the IDS 116, may be a physical component, or may be a functional module in a specific physical component or a device. The functional module may be an element in a hardware device, a software function running on dedicated hardware, or a virtualization function instantiated on a platform (for example, a cloud platform).

Still as shown in FIG. 3A and FIG. 3B, the OTA system 120 in the vehicle 100 may include an OTA main control module 121, an update agent (update agent, UA) module 122, a vehicle function system 123, and the like.

The OTA main control module 121 may also be referred to as an OTA manager. The OTA manager is a main control module in the OTA system, and is responsible for coordinating an OTA update strategy and update procedure control of the vehicle 100.

The UA module 122 is a module responsible for downloading and/or installing the update package, and may be configured to: be scheduled by the OTA main control module 121, to perform data flashing on the ECU electronic controller unit that needs to be updated, so as to perform the OTA update.

The vehicle function system 123 may include, for example, an energy management system, a vehicle mode management system, and a power system. The vehicle function system 123 may further include a system in the in-vehicle system 110, for example, the OBD 113 and the IDS 116. The vehicle function system 123 is a function system on which the OTA depends. Specifically, the vehicle function system 123 may be configured to provide function status information of the vehicle for the OTA main control module 121, for example, vehicle information such as remaining power information, gear and vehicle speed information, and vehicle mode information, so that the OTA system can determine status information of the vehicle.

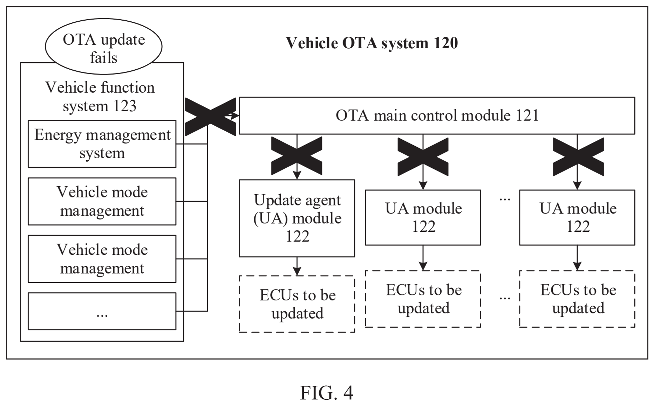

In some application scenarios, as shown in FIG. 4, an example in which the OTA update fails to be performed on the component deployed in the vehicle function system 123 and the component is damaged is used. In this case, when the component whose OTA update fails is repaired and updated, the OTA main control module 121 cannot obtain vehicle status information associated with the update condition, for example, status information of the component whose OTA update fails. In this case, the OTA main control module 121 cannot determine whether the vehicle meets the update condition corresponding to the repair and update. Consequently, the UA module 122 cannot be scheduled by the OTA main control module 121 to perform data flashing for the repair and update on the component whose OTA update fails, and the component whose OTA update fails cannot be repaired and updated.

In some implementations, each component of the OTA system 120 in FIG. 3A and FIG. 3B in this embodiment of this application, for example, the OTA main control module 121 or the UA module 122, may be a physical component, or may be a functional module in a specific physical component or a device. The functional module may be an element in a hardware device, a software function running on dedicated hardware, or a virtualization function instantiated on a platform (for example, a cloud platform).

Still as shown in FIG. 3A and FIG. 3B, the OTA server 200 includes a vehicle model management module 210, a vehicle management module 220, an ECU management module 230, a software management module 240, a task management module 250, a strategy management module 260, and the like.

The vehicle model management module 210 may be configured to manage difference information of OTA update corresponding to different vehicle models, for example, component difference information (high and low configuration information) and component software difference information in different vehicle models.

The vehicle management module 220 may be configured to manage information about a list of sold vehicles that can provide an OTA update service, for example, including customer information, a location, a vehicle status, and OTA update history information.

The ECU management module 230 may be configured to manage ECU information based on a dimension like a vehicle model or a vehicle, for example, ECU information of a specific vehicle model, configuration information of each ECU, ECU information of a specific vehicle, and configuration status information of each ECU.

The software management module 240 may be configured to manage software information based on a dimension like a vehicle model, a vehicle, and an ECU, for example, including information such as a software package type, a software storage address, and software version management.

The task management module 250 may be configured to manage task information, for example, including a type, a status, and a task report of a historical task. The task management module 250 may be further configured to manage task information of an online task, for example, a task creation, a publishing status, a task execution status, and a task result. The task type may include standard update, silent update, and forcible update.

Specifically, the standard update is usually an update task that needs user approval (or authorization), to iterate or update a function of a component. The silent update is usually an update task performed before the vehicle is sold (for example, when the vehicle is to be sold in a vehicle sales service shop), and does not need user approval (or authorization). However, after the vehicle is sold, the update task of the silent update is canceled. Forcible update is an update task that forcibly updates a component. When the component is updated in the forcible update, the user needs to confirm the update. After the user approvals or authorizes the update, the update task corresponding to the forcible update can only be delayed, and the user cannot cancel the update task.

In this embodiment of this application, the OTA server may add a rescue mode as an attribute under the forcible update, and a rescue task may be created in the rescue mode, to repair the vehicle whose OTA update fails. For example, an update condition corresponding to the rescue task in the rescue mode may be different from an update condition corresponding to an update task in a non-rescue mode, so that the rescue task can be performed on the vehicle.

The strategy management module 260 may be configured to set a task, for example, set a download condition, an update condition, or an update strategy based on an actual task.

It should be noted that FIG. 2 and FIG. 3A and FIG. 3B are merely example figures. Components included in the vehicle shown in FIG. 2 and FIG. 3A and FIG. 3B and a quantity of the components are not limited in embodiments of this application. In addition to the components shown in FIG. 2 and FIG. 3A and FIG. 3B, FIG. 2 and FIG. 3A and FIG. 3B may further include other components. In addition, names of the components in FIG. 2 and FIG. 3A and FIG. 3B are not limited. The components may alternatively have other names in addition to the names shown in FIG. 3A and FIG. 3B. For example, the names are replaced with names having same or similar functions. This is not limited.

In some embodiments, when the update method in embodiments of this application is implemented based on the application scenario shown in FIG. 3A and FIG. 3B and the architecture shown in FIG. 4, the following is mainly included: The vehicle 100 may receive, through the vehicle cloud channel 300, a first update task sent by the OTA server 200, where the first update task includes the first update package, and the first update package is used for the OTA update on the first component of the vehicle 100. The OTA main control module 121 in the OTA system 120 may obtain status information of the vehicle 100 based on the vehicle function system 123, to determine whether the vehicle 100 meets the first update condition, and when the vehicle 100 meets the first update condition, perform the first OTA update on the first component based on the first update package. Specifically, the UA module 122 may perform data flashing on the first component, to perform the first OTA update. When the first update OTA fails, the OTA main control module 121 may further obtain, based on the vehicle function system 123, the status information of the vehicle 100 after the first update OTA fails, and determine whether the vehicle 100 meets the second update condition. The second update condition does not include the condition associated with the first component and/or the second component, and the second component is a component that causes the first OTA update to fail. When the vehicle 100 meets the second update condition, the OTA main control module 121 performs the second OTA update on the first component based on the second update package. In this way, the first component of the vehicle whose OTA update fails can be quickly repaired, to improve efficiency of repairing the vehicle whose OTA update fails.

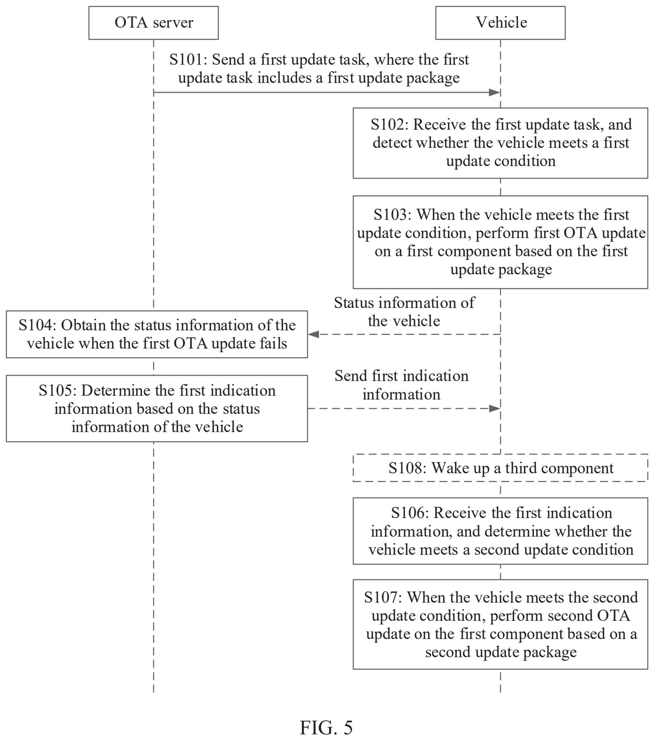

The following continues to describe the update method provided in embodiments of this application by using an example in which the first device is a vehicle, and the vehicle obtains an update task by using the OTA server, to perform the OTA update on the first component. FIG. 5 is a schematic flowchart of an update method according to an embodiment of this application. As shown in FIG. 5, the method may include the following steps S101 to S108.

S101: The OTA server sends a first update task to the vehicle, where the first update task includes a first update package.

In this embodiment of this application, when the vehicle needs to perform the OTA update on the first component, the vehicle needs to obtain the first update task. The first component is a to-be-updated component in the vehicle. For example, the first component may include but is not limited to a BMS, a PDU, an MCU, and a PEPS.

For example, the vehicle may send an update request to the OTA server, and the OTA server sends the first update task to the vehicle in response to the update request.

In an implementation, the OTA server may send the first update task to the vehicle through the vehicle cloud channel 300 shown in FIG. 2 or FIG. 3A and FIG. 3B. The first update task includes the first update package, the first update package includes an update file for performing the OTA update on the first component, and the first update package may be used to perform the OTA update on the first component of the vehicle.

S102: The vehicle receives the first update task, and detects whether the vehicle meets a first update condition.

In this embodiment of this application, after receiving the first update task, the vehicle may store the first update package in the first update task, to perform the OTA update on the first component. In addition, after receiving the first update task, before performing the OTA update on the first component, the vehicle further needs to detect whether the vehicle meets the first update condition, to ensure security of the OTA update on the first component.

Specifically, when the vehicle detects whether the vehicle meets the first update condition, a specific detected component may be determined based on the first update condition. For example, when the first update condition corresponds to components in the entire vehicle, the vehicle may detect whether the components in the entire vehicle meet the first update condition. For another example, when the first update condition corresponds to some components that are in the vehicle and that are associated with the OTA update on the first component, the vehicle may detect whether the some components that are in the vehicle and that are associated with the OTA update on the first component meet the first update condition.

The first update condition is a condition corresponding to the OTA update on the first component, and the first update condition includes at least a condition associated with the first component. The first update condition may include one update condition, or may further include a plurality of update conditions. When the first update condition includes a plurality of update conditions, all the plurality of update conditions may be conditions associated with the first component, or at least one of the plurality of update conditions may be a condition associated with the first component, and another update condition is a condition associated with another component in the vehicle.

For example, the first update condition may include a condition associated with an OTA system (for example, a software package being in position, a verified software package, or normal CPU load), a condition associated with a vehicle security system (for example, a vehicle mode being an update mode, an owner-enabled update authorization state, an enabled vehicle guard state, an enabled vehicle door lock, or a vehicle speed and a gear within an update threshold), and a condition of a component associated with the OTA update (for example, battery power that meets an update requirement, or a vehicle in a normal high and low voltage state).

In an example, the first component is an IVI system. Because update time of the IVI system is long, if power of the vehicle is low before the update, the vehicle may lose power in an update process, resulting in an update failure. Therefore, the first update condition needs to include that the battery power is greater than a first threshold. Specifically, the first update condition corresponding to the IVI system may include: The IVI system enables an update authorization state, the update package is in position, the update package passes verification, the vehicle mode is an update mode, the battery power is greater than the first threshold, or the like.

In another example, the first component is a BMS. Because the BMS relates to security, battery charging and discharging management, and the like, before update, an ACC gear needs to be an OFF gear, the entire vehicle needs to be powered off, and the vehicle is not in a charging state. Therefore, the update condition needs to include that the ACC gear is the OFF gear and a high-voltage charging status is uncharged. Specifically, the first update condition corresponding to the BMS may include: An update authorization state of the BMS is enabled, the update package is in position, the update package passes verification, the vehicle mode is an update mode, the vehicle gear is a P (P) gear, the ACC gear is the OFF gear, the high-voltage charging status is uncharged, the battery power meets the update requirement, and the like.

In an implementation, detecting whether the vehicle meets the first update condition in S102 may be performed by the OTA main control module 121 (referred to as an OTA manager below) in the OTA system shown in FIG. 3A and FIG. 3B. Specifically, the OTA manager may detect, by querying internal information of the OTA system, that the vehicle meets the update condition corresponding to the first component, for example, whether the update package is in position or whether the update package passes verification.

The OTA manager may further obtain information about a vehicle function system (for example, an energy management system, a vehicle mode management system, or a power system) by using a VCU, to detect that the vehicle meets the first update condition, for example, information indicating that the vehicle mode is the update mode, a high-voltage charging status, an entire vehicle high-voltage status, a vehicle gear status, a battery power status, and a battery voltage status.

S103: When the vehicle meets the first update condition, the vehicle performs first OTA update on the first component based on the first update package.

Specifically, when the vehicle meets the first update condition, that is, when the vehicle meets the update condition corresponding to the first component, the vehicle may perform the OTA update on the first component based on the first update package, that is, perform the first OTA update.

In some embodiments, when the first update condition includes the plurality of update conditions, the vehicle needs to perform the OTA update on the first component based on the first update package when the vehicle meets each of the plurality of update conditions.

In an implementation, S103 may be performed by the UA module 122 in the OTA system shown in FIG. 3A and FIG. 3B. For example, the UA module may extract an update file in the first update package, and then perform data flashing on a system of the first component based on the update file, to update the first component.

S104: The OTA server obtains status information of the vehicle when the first OTA update fails.

In this embodiment of this application, in S103, when the vehicle fails to perform the first OTA update on the first component based on the first update package, the OTA server may obtain the status information of the vehicle, to repair and update (namely, second OTA update) the first component.

The status information of the vehicle is associated with failure of the first OTA update, that is, the status information of the vehicle indicates status information obtained after the vehicle fails to perform the first OTA update on the first component. For example, the status information of the vehicle may indicate whether the function of the component in the vehicle is normal, whether the function of the component in the vehicle can meet the update requirement (meeting the update condition), and the like.

Specifically, the status information of the vehicle may include status information of the first component, that is, whether a function of the first component is normal, and whether the function of the first component can meet a use requirement. For example, the first component is the BMS. The status information of the BMS may be that the battery can be normally used, the battery cannot be normally used, the battery power meets the update condition, the battery power does not meet the update condition, or the like.

The status information of the vehicle may further include status information of the second component, and the second component is a component that causes the first OTA update to fail. For example, the first component is the PEPS system. In a process of performing the first OTA update on the PEPS system, if the battery is faulty, data flashing on the PEPS system is interrupted. Consequently, the first OTA update fails. In this case, the second component is the battery.

In some embodiments, the OTA server may obtain the status information of the vehicle based on one or more of log information of the first OTA update of the vehicle and user feedback information, that is, may determine the status information of the first component and the status information of the second component.

Specifically, in an implementation, the OTA server may receive the log information of the first OTA update sent by the OTA system of the vehicle, to obtain the status information of the vehicle. The log information is log information recorded in a process in which the OTA manager performs the first OTA update on the first component, and may specifically include an update process execution action, an execution result, update task failure prompt information, and the like. The OTA server may obtain the status information of the vehicle by extracting the log information of the OTA update, and may further determine the status information of the first component and the status information of the second component.

In another implementation, the OTA server may further receive the user feedback information, to obtain the status information of the vehicle. For example, management personnel may perform remote communication (for example, telephone communication or video communication) with a user (namely, the user of the vehicle whose OTA update fails), to obtain the status information of the vehicle whose OTA update fails, namely, user feedback information. For example, the battery of the vehicle cannot supply power, or the vehicle cannot be put into gear. In this case, the OTA server may determine, based on the user feedback information, the status information of the vehicle, for example, the battery cannot supply power or a gear system is abnormal.

S105: The OTA server determines first indication information based on the status information of the vehicle, and sends the first indication information to the vehicle.

In this embodiment of this application, the OTA server may determine the first indication information based on the status information of the vehicle obtained in S104. The first indication information may indicate the vehicle to perform the second OTA update based on a second update condition, to indicate the vehicle to quickly repair the first component whose first OTA update fails.

For example, when the status information of the vehicle includes the status information of the first component and the status information of the second component, the OTA server can determine the first indication information based on the status information of the first component and the status information of the second component, that is, indicate the vehicle to perform the second OTA update based on the second update condition (a condition associated with the first component and/or the second component is not included).

In some embodiments, the first indication information may be a second update task. Specifically, a task type of the second update task may be a forcible update task type. To be specific, after the second update task is delivered to the vehicle, the vehicle needs to perform forcible update based on the second update task. An update task corresponding to the forcible update task type needs to be performed after being authorized and agreed by the user, and the user has no permission to cancel the second update task. In this way, it can be ensured that the vehicle can perform the second OTA update on the first component based on the second update condition.

Further, the task type of the second update task may be specifically a first mode (referred to as a rescue mode below) in the forcible update task. An update condition corresponding to the rescue mode is different from an update condition corresponding to another mode in the forcible update task, and the update condition corresponding to the rescue mode may be determined based on the status information of the vehicle obtained after the first OTA update fails.

In an implementation, the second update task may include the second update condition, so that the vehicle can obtain the second update condition, and perform the second OTA update on the first component based on the second update condition.

In this case, the second update condition may be determined by the OTA server based on the status information of the vehicle. The example in which the first component is the BMS and a condition is the first update condition in S102 is still used. When the first OTA update fails to be performed on the BMS, causing the damage of the function, the status information of the vehicle obtained by the OTA server may include: The BMS function is damaged, that is, the vehicle cannot obtain detection results associated with the BMS, such as a BMS update authorization state, a high-voltage charging status, and battery power, and cannot detect whether the vehicle meets the following in the first update condition: The update authorization state of the BMS is enabled, the high-voltage charging status is uncharged, the battery power meets the update requirement, and the like.

Therefore, the OTA server may determine that the second update condition of the BMS may include: The update package is in position, the update package passes the verification, the vehicle mode is the update mode, the vehicle gear is the P (P) gear, the ACC gear is the OFF gear, and the like. In this way, the vehicle can perform the second OTA update on the BMS when the vehicle meets the second update condition.

In another implementation, the second update task may further include an execution strategy, and the execution strategy is associated with the second update condition. Specifically, the execution strategy may indicate the vehicle to perform a detection step (or referred to as a pre-step) before the second OTA update is performed, that is, the vehicle may perform the pre-step on the vehicle based on the execution strategy, to determine whether the vehicle meets the second update condition.

For example, the execution strategy may include one or more of the following: skipping performing detection on the first component, skipping performing detection on the second component, performing detection on the first component and ignoring a detection result obtained by performing detection on the first component, and performing detection on the second component and ignoring a detection result obtained by performing detection on the second component. In this way, the vehicle performs, based on the execution strategy, the pre-step before the second OTA update is performed, to detect whether the vehicle meets the second update condition.

In some embodiments, the OTA server may receive a task creation instruction (referred to as a first instruction below) from the management personnel, and create the second update task. To ensure security of performing the second update task by the vehicle, the management personnel in this embodiment are personnel with permission to create the second update task. For example, the management personnel may log in to the OTA server by using an authorized account, and enter the first instruction.

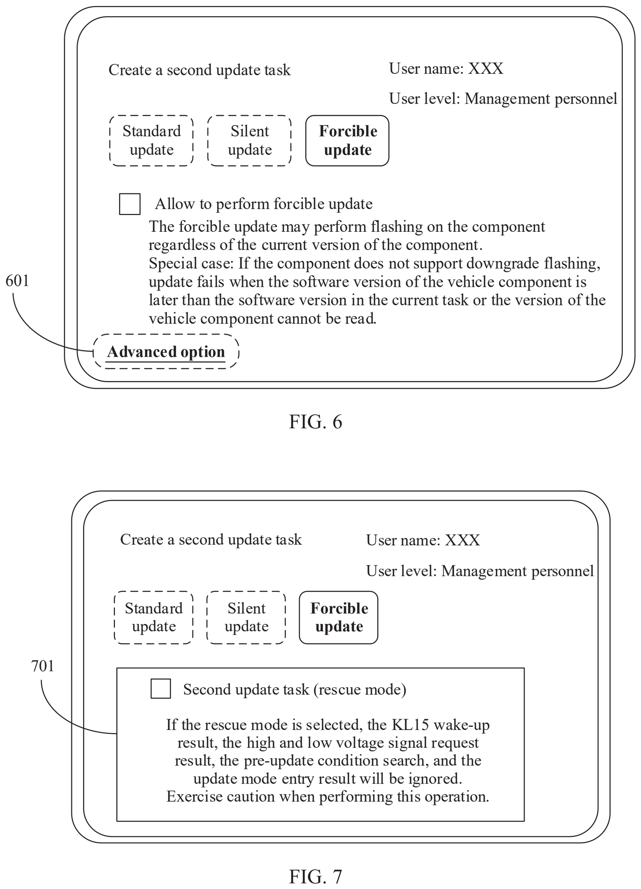

In an implementation, FIG. 6 is a diagram 1 of creating a second update task by an OTA server according to an embodiment of this application. As shown in FIG. 6, a display interface of the OTA server may provide an entry option 601 for creating the second update task, for example, an Advanced option. The management personnel may enter the first instruction through the entry option 601.

In some embodiments, as shown in FIG. 6, the entry option 601 may be set to be in the display interface of the OTA server to which the management personnel log in by using the authorized account, and there is no entry option in a display interface of an OTA server to which a common user logs in. In this way, security of creating the second update task can be improved, and the security of performing the second OTA update on the first component can be improved.

It may be understood that the "Advanced option" is merely an example name, and does not limit the solution shown in embodiments of this application. For example, the "Advanced option" may alternatively be replaced with a name that has a same or similar function, for example, "Create option" or "Generate option".

In some embodiments, the OTA server may further display risk prompt information in the display interface, to prompt the user with an operation warning and a risk prompt for creating the second update task. FIG. 7 is a diagram 2 of creating a second update task by an OTA server according to an embodiment of this application. As shown in FIG. 7, risk prompt information 701 is also displayed in the display interface of the OTA server. Content of the risk prompt information 701 may include a high-risk operation warning: Before the operation, ensure that the vehicle owner is notified to park the vehicle in a safe and reliable area, put the vehicle into a P gear to park, remove a security OBD device, remove the charging connector, close the vehicle door, and wait beside the vehicle; otherwise, serious accidents may occur, for example, the vehicle may be out of control, and damaged, and personal safety cannot be ensured. In this way, the security of creating the second update task can be further improved.

It may be understood that the risk prompt information is an example for description, and the risk prompt information may be set based on an actual application requirement. This is not specifically limited in this application.

In some embodiments, when the second update task includes the second update condition or the execution strategy, the OTA server may further receive a second strategy configuration instruction (referred to as a second instruction below) from the management personnel, to configure the second update condition or the execution strategy in the second update task.

For example, the OTA server may receive the second instruction, where the second instruction indicates a detection condition that corresponds to the second OTA update and that is determined based on the status information of the vehicle. The OTA server may determine, based on the second instruction, as the second update condition, the detection condition corresponding to the second OTA update.

In some embodiments, the second update condition or the execution strategy in the second update task may alternatively be independently used as the first indication information to be sent to the vehicle, to indicate the vehicle to perform the second OTA update on the first component based on the second update condition.

In an example, the first indication information may alternatively be the second update condition, that is, the OTA server may directly send the second update condition to the vehicle, to indicate the vehicle to perform the second OTA update on the first component based on the received second update condition.

In another example, the first indication information may alternatively be the execution strategy, and the execution strategy is associated with the second update condition. In other words, the OTA server may directly send the execution strategy to the vehicle, to indicate the vehicle to perform the pre-step based on the execution strategy, to detect whether the vehicle meets the second update condition.

In an implementation, the OTA server may send the first indication information to the vehicle through the vehicle cloud channel 300 shown in FIG. 2 or FIG. 3A and FIG. 3B. For example, when the first indication information is the execution strategy, or the first indication information is the second update task, and the second update task includes the execution strategy, the execution strategy may be, for example, a file in a format like javascript object notation (javascript object notation, JSON) or extensible markup language (extensible markup language, XML). The OTA server may send the execution strategy to the vehicle in a secure wireless communication manner according to the datagram transport layer security (datagram transport layer security, DTLS) and the hypertext transfer protocol over secure socket layer (hypertext transfer protocol over secure socket layer, HTTPS).

S106: The vehicle receives the first indication information, and determines whether the vehicle meets the second update condition.

Specifically, after receiving the first indication information, the vehicle may perform the second OTA update based on the second update condition, that is, detect whether the vehicle meets the second update condition, to ensure security of performing the second OTA update on the first component, and improve a success rate of repairing and upgrading the first component.

For example, the second update condition does not include the condition associated with the first component and/or the second component, and therefore, when the vehicle detects whether the vehicle meets the second update condition, at least one of the following is included: skipping performing detection on the first component, skipping performing detection on the second component, performing detection on the first component and ignoring a detection result obtained by performing detection on the first component, and performing detection on the second component and ignoring a detection result obtained by performing detection on the second component. In this way, whether the first device meets the second update condition can be quickly determined, to improve efficiency of performing the second OTA update on the first component.

In an implementation, detecting whether the vehicle meets the second update condition in S106 may be performed by the OTA main control module 121 in the OTA system shown in FIG. 4. For a specific implementation, refer to the method in which the OTA manager detects whether the vehicle meets the first update condition in S102. Details are not described herein again.

In some embodiments, when the second update condition of the first component is preset in the vehicle, after the first OTA update fails, the update method provided in this embodiment of this application may not perform S104 to S106, that is, the vehicle may not need to obtain the first indication information from the OTA server. After the first OTA update fails, the vehicle may perform the second OTA update based on the preset second update condition, that is, determine whether the vehicle meets the second update condition, and perform the following S107 when the vehicle meets the second update condition.

In some embodiments, after the first OTA update fails, the vehicle may further obtain the status information of the vehicle, and determine the second update condition based on the status information of the vehicle. In this case, S104 to S106 may not be performed, and the vehicle may not need to obtain the first indication information from the OTA server. Specifically, for a method in which the vehicle determines the second update condition based on the status information of the vehicle, refer to the method in which the OTA server determines the second update condition based on the status information of the vehicle in S105. Details are not described herein again. After determining the second update condition, the vehicle may perform the second OTA update based on the second update condition, that is, determine whether the vehicle meets the second update condition, and perform the following S107 when the vehicle meets the second update condition.

S107: When the vehicle meets the second update condition, the vehicle performs the second OTA update on the first component based on a second update package.

In this embodiment of this application, when the vehicle meets the second update condition, that is, when the vehicle meets the update condition corresponding to the second OTA update, the vehicle may perform the second OTA update on the first component based on the second update package. The second update package is associated with the first update package, that is, the second update package may be the same as the first update package, or the second update package may be different from the first update package, and the second update package may be determined based on the first update package.

Specifically, when update content of the second OTA update performed on the first component is the same as update content of the first OTA update performed on the first component, the second update package is the same as the first update package. When update content of the second OTA update performed on the first component is different from update content of the first OTA update performed on the first component, the second update package is different from the first update package.

For example, the update content of the first OTA update is overall update on the first component, and the update content of the second OTA update is partial update on a part that fails to be updated and that is of the first component. In this case, the second update package is different from the first update package, and the second update package may be a part of content of the first update package.

In some embodiments, when the second update package is the same as the first update package, if the vehicle still stores the first update package, the vehicle does not need to obtain the second update package (namely, the first update package).

In some embodiments, when the second update package is the same as the first update package, but the vehicle does not store the first update package, or the second update package is different from the first update package, the vehicle needs to obtain the second update package.

In an example, in S105, the OTA server may send the second update package when sending the first indication information to the vehicle, so that the vehicle obtains the second update package. For example, when the first indication information is the second update task, the second update task may include the second update package.

In another example, the vehicle may alternatively obtain the second update package by using the OTA server after the vehicle receives the first indication information in S106 and before the vehicle performs the second OTA update on the first component based on the second update package in S107.

In an implementation, S107 may be performed by the UA module 122 in the OTA system shown in FIG. 3A and FIG. 3B. For example, the UA module may extract an update file in the second update package, and then perform data flashing on a system of the second component based on the update file, to repair and update the second component.

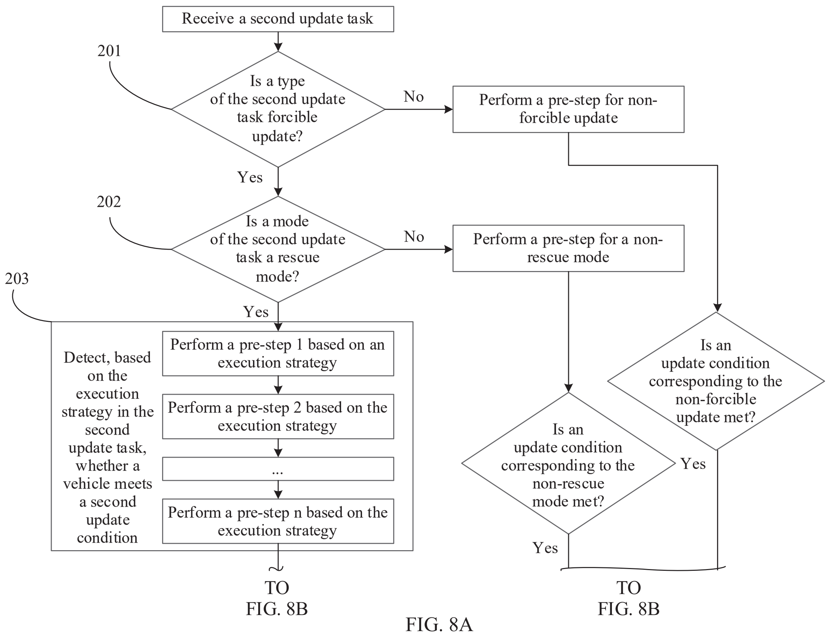

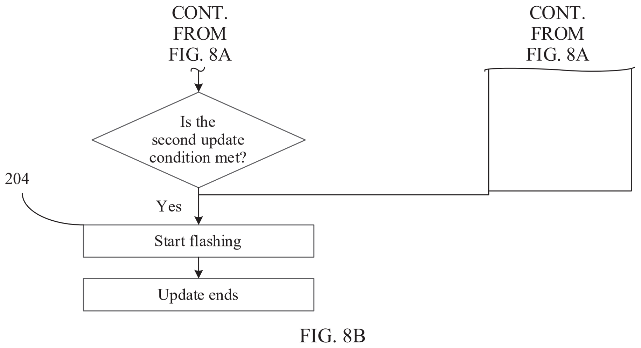

In some embodiments, for example, the first indication information is the second update task, the second update task includes the execution strategy and the second update package, and the second update task is in the rescue mode in the forcible update. FIG. 8A and FIG. 8B are a schematic flowchart of a second OTA update method according to an embodiment of this application. As shown in FIG. 8A and FIG. 8B, after the vehicle receives the first indication information, a specific method for performing the second OTA update on the first component may include S201 to S204.

S201: The vehicle determines whether a type of the second update task is the forcible update.

S202: When determining that the type of the second update task is the forcible update, the vehicle determines whether the second update task is in the rescue mode. Otherwise, the vehicle detects the vehicle based on an update condition corresponding to non-forcible update.

S203: When determining that the second update task is in the rescue mode, the vehicle detects, based on the execution strategy in the second update task, whether the vehicle meets the second update condition. Otherwise, the vehicle detects the vehicle based on an update condition corresponding to a non-rescue mode.

S204: When the vehicle meets the second update condition, the vehicle performs data flashing on the first component based on the second update package, to perform the second OTA update on the first component.

According to the update method provided in this embodiment, when the vehicle fails to perform the first OTA update on the first component based on the first update condition, the vehicle can determine whether the vehicle meets the second update condition. When the vehicle meets the second update condition, the second OTA update is performed on the first component, to repair the vehicle. In this way, when the first component and/or the second component are/is damaged, or detection results/a detection result of the first component and/or the second component cannot be obtained, the vehicle can perform the second OTA update on the first component of the vehicle, so that the vehicle whose OTA update fails can be quickly repaired, to improve efficiency of repairing the vehicle, and improve user experience.

In some application scenarios, after the vehicle fails to perform the OTA update on the first component, a component in the vehicle may enter a non-working state like a standby state or a sleep state when the component not work (is not operated) for a long time, that is, the component enters a low-load rest state, to reduce energy consumption of the vehicle and save energy.

However, if a component (referred to as a third component below) associated with performing the second OTA update on the first component is in a non-working state, that is, a corresponding function of the third component cannot be implemented because the third component cannot work normally, the vehicle cannot perform the second OTA update on the first component. Therefore, in some embodiments, after the first OTA update fails and before the second OTA update is performed, as shown in FIG. 5, the update method provided in this embodiment of this application further includes the following step.

S108: The vehicle wakes up the third component.

The third component includes at least a component associated with performing the second OTA update on the first component. For example, the third component may include a component that needs to be deployed by using the OTA manager when the second OTA update is performed on the first component, the component deployed by using the OTA manager may be, for example, a T-box, and the third component may be the T-box. In this way, the vehicle may not wake up the entire vehicle, but wake up only the third component, to enable the third component to enter a normal working state, so that second OTA update can be performed on the first component. In this way, it can be ensured that the vehicle can perform the second OTA update on the first component, and energy consumption of the vehicle can be reduced.

In some embodiments, the vehicle may send a wake-up instruction to the third component, to instruct the third component to change from be in a non-working state (for example, a sleep state) to be in a working state, so that the third component can normally implement the corresponding function. For example, the third component is the T-box. The vehicle may send the wake-up instruction to the T-box through a short message. A communication module (for example, a SIM card short message functional module) in the T-box receives the wake-up instruction, and in response to the wake-up instruction, the T-box is woken up.

The wake-up instruction may be determined based on status information of the third component. Specifically, the vehicle may determine, based on the status information of the third component, whether the third component is in a non-working state like a standby state, a sleep state, or a state in which the third component cannot be woken up. If the third component is in the non-working state, the vehicle may determine a wake-up instruction to wake up the third component. For example, the third component is the T-box. If status information of the T-box is that the T-box is in a state in which the T-box cannot be woken up, or the T-box is in a sleep state, that is, the T-box is in a low-power-consumption non-working state, the wake-up instruction may be determined to wake up the T-box, to enable the T-box to enter a normal working state, to implement a network communication function.

In an implementation, the wake-up instruction may include identification information of the third component, and the identification information is a unique identifier of one third component, and is used to distinguish the third component from another third component. The identification information may generally include a hardware number of the third component or a character string generated by the system. In this way, the vehicle can accurately wake up, based on the identification information in the wake-up instruction, the third component corresponding to the identification information.

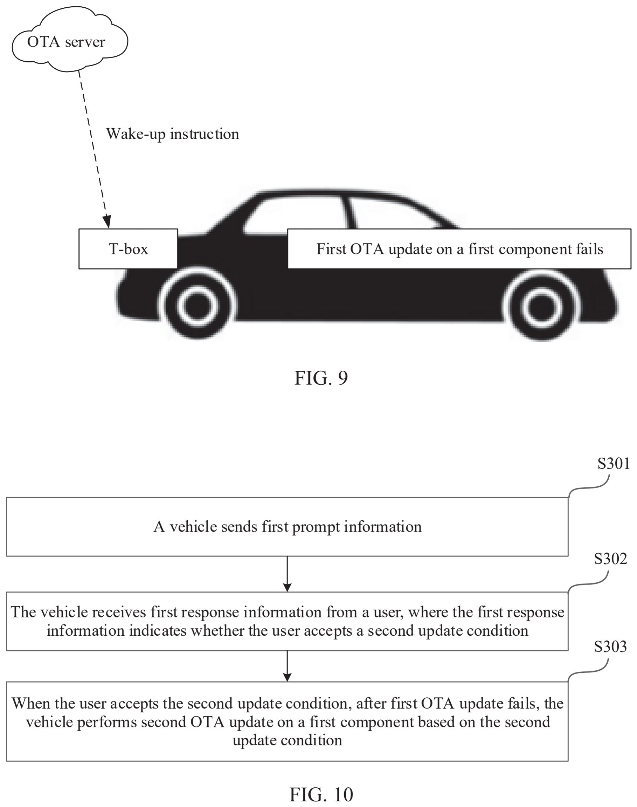

In some embodiments, as shown in FIG. 9, the vehicle may further receive the wake-up instruction sent by the OTA server, and wake up the third component in response to the wake-up instruction. The wake-up instruction may be determined by the OTA server based on the status information of the third component. In S104, when the first OTA update fails, the status information of the vehicle obtained by the OTA server may further include the status information of the third component.

In some embodiments, the OTA server may obtain the status information of the vehicle based on one or more of log information of the first OTA update of the vehicle and user feedback information, and determine the status information of the third component. For a specific implementation, refer to the implementation of S 104. Details are not described herein again.

In some embodiments, in S105, the first indication information sent by the OTA server to the vehicle may include the wake-up instruction. For example, if the first indication information is the second update task, the second update task may include the wake-up instruction. In this case, if the second update task further includes the execution strategy, after receiving the second update task, the vehicle first wakes up the third component in response to the wake-up instruction, and then performs the pre-step on the vehicle based on the execution strategy. In this way, it can be ensured that the vehicle can perform the pre-step on the vehicle, to detect whether the vehicle meets the second update condition.

In some embodiments, to improve security of performing, by the vehicle, the second OTA update on the first component based on the second update condition, the vehicle may further send prompt information to query the user whether to accept the second update condition. FIG. 10 is a schematic flowchart 2 of an update method according to an embodiment of this application. As shown in FIG. 10, specifically, another update method provided in embodiments of this application includes the following steps.

S301: The vehicle sends first prompt information.

In this embodiment of this application, the vehicle may send the first prompt information before performing first OTA update on a first component based on a first update condition. For example, the vehicle may send the first prompt information before S101, to query the user whether to accept a second update condition after the first OTA update fails.

Specifically, the first indication information is used to query the user who uses the vehicle whether to accept the second update condition. The second update condition is a condition for second OTA update, the second OTA update is update performed after the first OTA update fails, the first OTA update is update performed on the first component of the vehicle based on a first update package when the vehicle meets the first update condition, the first update condition includes at least a condition associated with the first component, the second update condition does not include a condition associated with the first component and/or a second component, and the second component is a component that causes the first OTA update to fail.

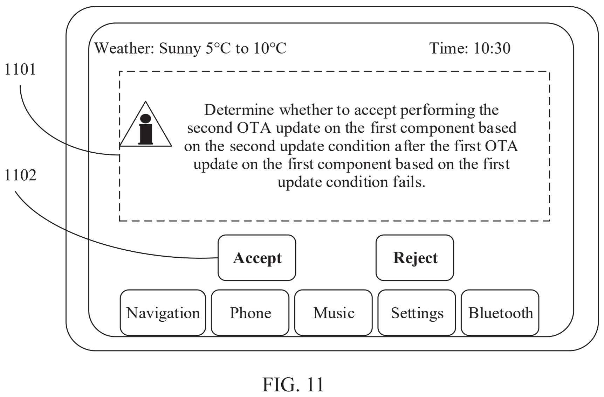

For example, FIG. 11 is a diagram 1 that displays first prompt information according to an embodiment of this application. As shown in FIG. 11, content of the first prompt information 1101 may be that: Determine whether to accept performing the second OTA update on the first component based on the second update condition after the first OTA update on the first component based on the first update condition fails. Specifically, the content of the first prompt information may be set based on an actual application requirement. This is not specifically limited in this application.

In an implementation, the content of the first prompt information may be displayed on a display of a head unit in the vehicle. As shown in FIG. 11, first prompt information 1101 is displayed in a display interface of the display of the head unit, to query the user whether to accept the second update condition.

In an implementation, the content of the first prompt information may alternatively be displayed on a display of a second device. The second device is a second device of the user who uses the vehicle, and the second device may be, for example, but is not limited to, a smartphone, a netbook, a tablet computer, a smartwatch, a smart band, a telephone watch, or a palmtop computer.

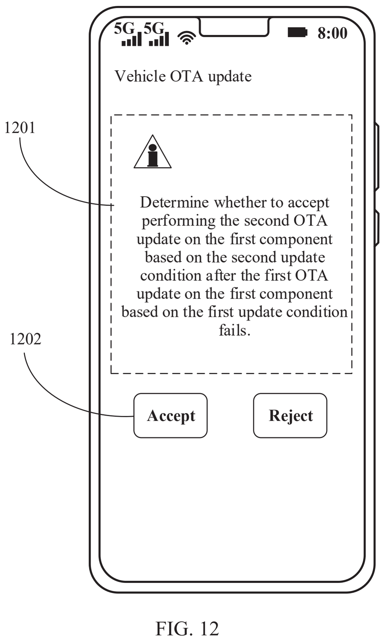

For example, the second device is a smartphone. The vehicle may further send the first prompt information to the smartphone of the user, and the smartphone receives and displays the first prompt information on a display. FIG. 12 is a diagram 2 that displays first prompt information according to an embodiment of this application. As shown in FIG. 12, first prompt information 1201 is displayed in a display interface of the display of the smartphone, to query the user whether to accept the second update condition.

S302: The vehicle receives first response information from the user, where the first response information indicates whether the user accepts the second update condition.

In an example, the vehicle displays the first indication information by using the head unit. In this case, the vehicle may receive the first response information from the user by using the head unit. As shown in FIG. 11, the display interface of the head unit may further include an accept control 1102. To be specific, the user may tap the accept control 1102, to send the first response information to the vehicle by using the head unit, to indicate that the user accepts the second update condition. The "Accept" control is an example name. The name of the control is not limited in embodiments of this application, and may alternatively be replaced with a name that has a same or similar function, for example, "Acknowledge" or "Agree".

In another example, the first indication information is displayed by using the second device of the user. In this case, the vehicle may alternatively receive the first response information from the user by using the second device. As shown in FIG. 12, the display interface of the head unit may further include an accept control 1202. To be specific, the user may tap the accept control 1202, to send the first response information to the vehicle by using the second device, to indicate that the user accepts the second update condition. The "Accept" control is an example name. The name of the control is not limited in embodiments of this application, and may alternatively be replaced with a name that has a same or similar function, for example, "Acknowledge" or "Agree".

In some embodiments, when the first response information is not received, the vehicle may determine that the user does not accept the second update condition. In this way, the security of performing the second OTA update by the vehicle can be further improved.

S303: When the user accepts the second update condition, after the first OTA update fails, the vehicle performs the second OTA update on the first component based on the second update condition.

When the vehicle receives the first response information indicating that the user accepts the second update condition, after the vehicle fails to perform the first OTA update on the first component, the vehicle may perform the second OTA update on the first component based on the second update condition. In this way, the security of performing the second OTA update on the first component by the vehicle is improved.

In some embodiments, to further improve the security of performing the second OTA update on the first component by the vehicle, in S303, after the first OTA update fails, the vehicle may send the prompt information again, to query the user whether to accept performing the second OTA update on the first component based on the second update condition. Specifically, S303 may include S3031 to S3033.

S3031: The vehicle sends second prompt information.

In this embodiment of this application, the vehicle may send the second prompt information after failing to perform the first OTA update on the first component based on the first update condition. For example, after S103, the vehicle may send the second prompt information when the first OTA update fails, to query the user whether to accept performing the second OTA update on the first component based on the second update condition.

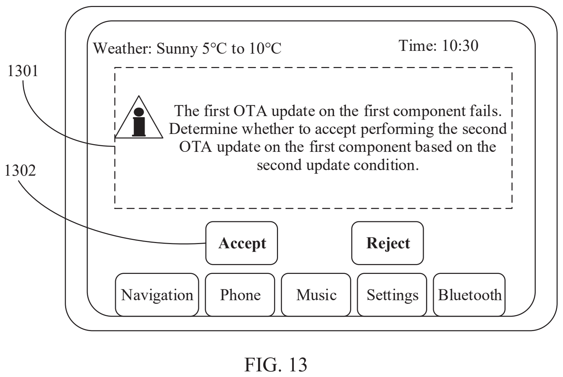

For example, FIG. 13 is a diagram 1 that displays second prompt information according to an embodiment of this application. As shown in FIG. 13, content of the second prompt information 1301 may be that: The first OTA update on the first component fails. Determine whether to accept performing the second OTA update on the first component based on the second update condition. Specifically, the content of the first prompt information 1301 may be set based on an actual application requirement. This is not specifically limited in this application.

In an implementation, if a function of a head unit system of the vehicle is intact after the first OTA update on the first component fails, as shown in FIG. 13, the second prompt information 1301 may be displayed on the display of the head unit in the vehicle.

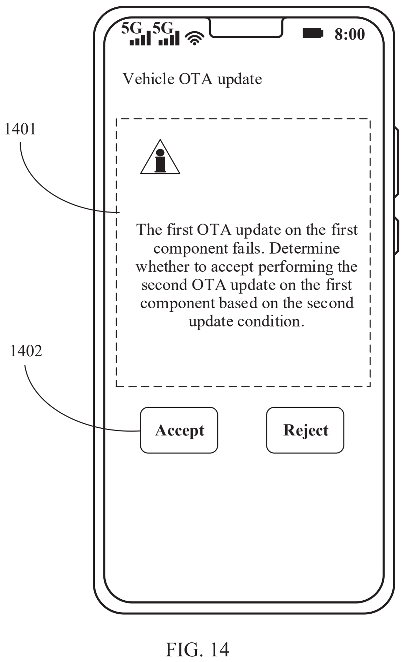

In an implementation, the content of the second prompt information may alternatively be displayed on the display of the second device. For example, the second device is the smartphone. The vehicle may further send the second prompt information to the smartphone of the user, and the smartphone receives and displays the second prompt information on the display. FIG. 14 is a diagram 2 that displays second prompt information according to an embodiment of this application. As shown in FIG. 14, second prompt information 1401 is displayed in a display interface of the display of the smartphone, to query the user whether to accept performing the second OTA update on the first component based on the second update condition.

S3032: The vehicle receives second response information from the user, where the second response information indicates whether the user accepts performing the second OTA update on the first component based on the second update condition.

The user may determine, based on the second prompt information, with reference to the status information of the vehicle, and an actual requirement, whether to accept performing the second OTA update on the first component based on the second update condition. For example, with reference to location information of the vehicle, when the vehicle is close to an OTA update center, the user may not accept performing the second OTA update on the first component based on the second update condition. The OTA update center may be configured to perform the second OTA update on the first component.

Specifically, similar to that the vehicle receives the first response information in S302, the vehicle may receive the second response information from the user by using the head unit, that is, the user may send the second response information by tapping an accept control 1302 in the display interface of the head unit shown in FIG. 13. The vehicle may further receive the second response information from the user by using the second device, that is, the user may send the second response information by tapping an accept control 1402 in the display interface of the smartphone shown in FIG. 14. Specifically, for a method in which the vehicle receives the second response information, refer to the method in which the vehicle receives the first response information. Details are not described herein again.

S3033: When the user accepts performing the second OTA update on the first component based on the second update condition, the vehicle performs the second OTA update on the first component based on the second update condition.

If the vehicle receives information indicating that the user accepts performing the second OTA update on the first component based on the second update condition, the vehicle may perform the second OTA update on the first component based on the second update condition. For example, S106 may be performed to obtain and receive the first prompt information. In this way, the security of performing the second OTA update on the first component by the vehicle is improved.

Specifically, a method in which the vehicle performs the second OTA update on the first component based on the second update condition may include: when the vehicle meets the second update condition, performing the second OTA update on the first component based on a second update package, where the second update package is associated with the first update package.

In some embodiments, the vehicle can further determine, based on the location information of the vehicle, whether to send the second prompt information, to improve validity of the second prompt information. Specifically, S303 may further include S3034 to S3037.

S3034: The vehicle obtains the location information of the vehicle.

Specifically, the vehicle may obtain the location information by using a positioning and navigation system of the vehicle. For example, the positioning and navigation system may include but is not limited to a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

S3035: When a first distance is greater than a first threshold, the vehicle sends the second prompt information.

The second prompt information is used to query the user whether to accept performing the second OTA update on the first component based on the second update condition. The first distance is associated with the location information of the vehicle. Specifically, the first distance is a distance between the vehicle and the OTA update center, and the OTA update center may be configured to perform the second OTA update on the first component. The first threshold may be set by the user based on an actual application requirement. For example, the first threshold may be 500 meters. In this way, when the distance between the vehicle and the OTA update center is greater than the first threshold, the vehicle sends the second prompt information. Correspondingly, when the distance between the vehicle and the OTA update center is less than or equal to the first threshold, the vehicle may not send the second prompt information, and a rescue manner may be used, for example, service personnel of the OTA update center arrive at the vehicle site and perform the second OTA update on the first component. In this way, an operation procedure of the second OTA update on the first component can be simplified, power consumption of the vehicle can be reduced, and the validity of the second prompt information and user experience can be improved.

S3036: The vehicle receives the second response information from the user, where the second response information indicates whether the user accepts performing the second OTA update on the first component based on the second update condition.

S3037: When the user accepts performing the second OTA update on the first component based on the second update condition, the vehicle performs the second OTA update on the first component based on the second update condition.

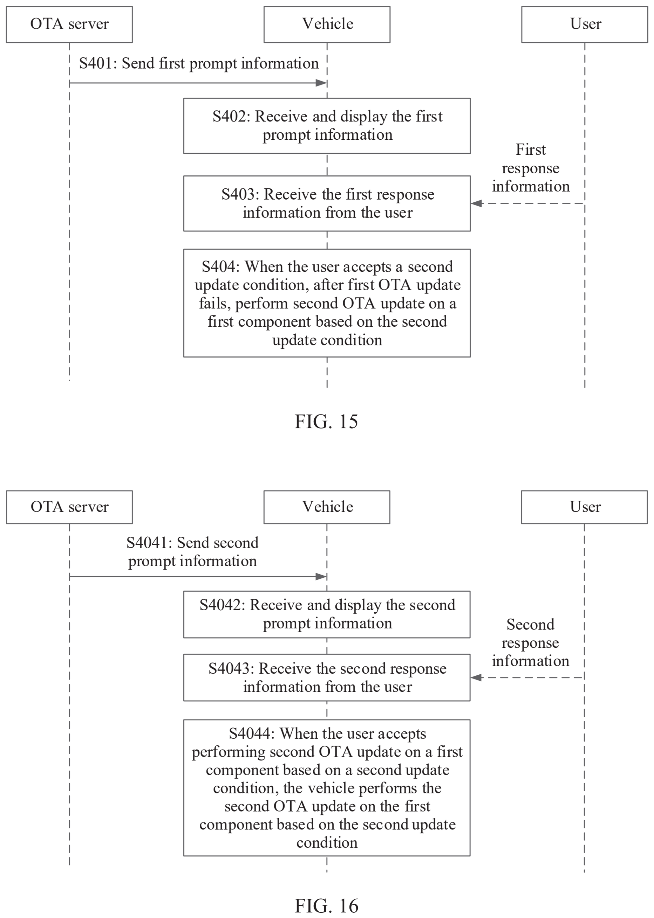

In some embodiments, alternatively, the OTA server may send the first prompt information and the second prompt information to the vehicle, and the vehicle may receive and display the first prompt information and the second prompt information sent by the OTA server. FIG. 15 is a schematic flowchart 3 of an update method according to an embodiment of this application. As shown in FIG. 15, specifically, the update method provided in embodiments of this application may alternatively include the following steps.

S401: The OTA server sends the first prompt information to the vehicle.

S402: The vehicle receives and displays the first prompt information.

S403: The vehicle receives first response information from the user.

S404: When the user accepts a second update condition, after first OTA update fails, the vehicle performs the second OTA update on a first component based on a second update condition.

In some embodiments, as shown in FIG. 16, in S404, after the first OTA update fails, and before the vehicle performs the second OTA update on the first component based on the second update condition, the method further includes the following steps.

S4041: The OTA server sends the second prompt information to the vehicle.

S4042: The vehicle receives and displays the second prompt information.

S4043: The vehicle receives second response information from the user.

S4044: When the user accepts performing the second OTA update on the first component based on the second update condition, the vehicle performs the second OTA update on the first component based on the second update condition.

It may be understood that, to implement the foregoing functions, the electronic device includes a hardware structure and/or a software module for performing each corresponding function. A person skilled in the art should easily be aware that, in combination with algorithms and steps the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, division into the modules is an example, and is merely logical function division. In an actual implementation, there may be another division manner.

An embodiment of this application further provides an update apparatus. The update apparatus may be the first device (for example, the vehicle), a chip in the first device, or a system-on-a-chip. The update apparatus may be configured to perform a function of the first device in embodiments.

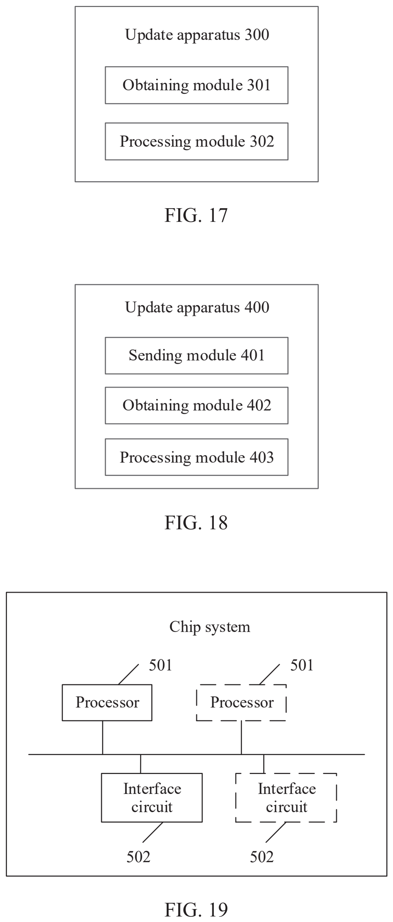

In an implementation, FIG. 17 is a diagram 1 of a structure of an update apparatus according to an embodiment of this application. As shown in FIG. 17, the update apparatus 300 includes an obtaining module 301 and a processing module 302. The processing module 302 may be, for example, the OTA main control module 121 in the architecture shown in FIG. 3A and FIG. 3B. Details are as follows.

The obtaining module 301 is configured to obtain a first update task, where the first update task includes a first update package, and the first update package is used for over the air OTA update on a first component of a first device;
the processing module 302 is configured to: when the first device meets a first update condition, perform first OTA update on the first component based on the first update package, where the first update condition includes at least a condition associated with the first component;
the processing module 302 is further configured to: when the first OTA update fails, determine whether the first device meets a second update condition, where the second update condition does not include a condition associated with the first component and/or a second component, and the second component is a component that causes the first OTA update to fail; and
the processing module 302 is further configured to: when the first device meets the second update condition, perform the second OTA update on the first component based on a second update package, where the second update package is associated with the first update package.

In the update apparatus provided in this embodiment of this application, the processing module 302 can perform the first OTA update on the first component based on the first update task obtained by the obtaining module 301. The processing module 302 can further perform, after the first OTA update on the first component fails, the second OTA update on the first component based on the second update condition, to repair and update the first component.

In some embodiments, after the first OTA update fails and before the second OTA update is performed, the processing module 302 is specifically configured to perform at least one of the following: skipping performing detection on the first component, skipping performing detection on the second component, performing detection on the first component and ignoring a detection result obtained by performing detection on the first component, and performing detection on the second component and ignoring a detection result obtained by performing detection on the second component.

In some embodiments, after the first OTA update fails, the obtaining module 301 is further configured to obtain first indication information, where the first indication information indicates to perform the second OTA update based on the second update condition.

In some embodiments, after the first OTA update fails and before the second OTA update is performed, the processing module 302 is further configured to wake up a third component, where the third component includes at least a component associated with performing the second OTA update on the first component.

In some embodiments, the obtaining module 301 is further configured to receive a wake-up instruction. The processing module 302 is further configured to wake up the third component in response to the wake-up instruction.

An embodiment of this application further provides an update apparatus. The update apparatus may be the OTA server, a chip in the OTA server, or a system-on-a-chip. The update apparatus may be configured to perform a function of the OTA server in embodiments.

In an implementation, FIG. 18 is a diagram 1 of a structure of an update apparatus according to an embodiment of this application. As shown in FIG. 18, the update apparatus 400 includes a sending module 401. Details are as follows.

The sending module 401 is configured to send a first update task, where the first update task includes a first update package, and the first update package is used to perform OTA update on a first component of a first device; and
the sending module 401 is further configured to: when the first device fails to perform first OTA update on the first component based on the first update package, send first indication information, where the first indication information indicates the first device to perform second OTA update based on a second update condition, the second update condition does not include a condition associated with the first component and/or a second component, the second component is a component that causes the first OTA update to fail, the second OTA update is to perform update on the first component based on a second update package, and the second update package is associated with the first update package.

In some embodiments, the update apparatus 400 further includes an obtaining module 402 and a processing module 403.

The obtaining module 402 is configured to obtain status information of the first component and/or the second component, where the status information of the first component and/or the second component is associated with failure of the first OTA update; and
the processing module 403 is configured to determine the second update condition based on the status information of the first component and/or the second component.

In some embodiments, the obtaining module 402 is further configured to obtain status information of a third component.

The processing module 403 is further configured to determine a wake-up instruction based on the status information of the third component.

The sending module 401 is further configured to send the wake-up instruction determined by the processing module 403.

In the update apparatus provided in this embodiment of this application, the processing module 403 can determine the second update condition based on the status information of the first component and/or the second component obtained by the obtaining module 402. In addition, when the first device fails to perform the first OTA update on the first component based on the first update package, the first indication information may be sent by using the sending module 401, to indicate the first device to perform the second OTA update based on the second update condition. In this way, the second OTA update is performed on the first component, to repair and update the first component.

It should be understood that division of modules in the apparatus is merely logical function division. In an actual implementation, all or some of the modules may be integrated into one physical entity or may be physically separated. In addition, the modules in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the modules in the apparatus. The processor is, for example, a general-purpose processor, for example, a central processing unit (Central Processing Unit, CPU) or a microprocessor, and the memory is a memory in the apparatus or a memory outside the apparatus. Alternatively, the modules in the apparatus may be implemented in a form of hardware circuit, and functions of some or all modules may be implemented through design of the hardware circuit. The hardware circuit may be understood as one or more processors. For example, in an implementation, the hardware circuit is an application-specific integrated circuit (application-specific integrated circuit, ASIC), and the functions of some or all of the modules are implemented through design of a logical relationship between elements in the circuit. For another example, in another implementation, the hardware circuit may be implemented by a programmable logic device (programmable logic device, PLD), for example, a field programmable gate array (Field Programmable Gate Array, FPGA), the field programmable gate array may include a large quantity of logic gate circuits, and a connection relationship between the logic gate circuits is configured based on a configuration file, to implement the functions of some or all of the modules. All the modules of the apparatus may be implemented in a form of software invoked by the processor, or may be implemented in a form of hardware circuit, or some of the modules are implemented in a form of software invoked by the processor, and remaining modules are implemented in a form of hardware circuit.

In this embodiment of this application, the processor is a circuit having a signal processing capability. In an implementation, the processor may be a circuit having an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration file to implement hardware circuit configuration may be understood as a process in which the processor loads instructions to implement the functions of some or all of the modules. In addition, the circuit may be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the modules in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, the all or some of the modules in the apparatus may be integrated, or may be implemented independently. In an implementation, the modules may be integrated together, and implemented in a form of system-on-a-chip (system-on-a-chip, SOC). The SOC may include at least one processor, configured to implement any one of the foregoing methods or implement functions of the modules in the apparatus. Types of the at least one processor may be different, for example, including a CPU and an FPGA, a CPU and an artificial intelligence processor, or a CPU and a GPU.

An embodiment of this application further provides a vehicle. The vehicle includes the update apparatus, for example, the update apparatus 300. By using the apparatus, the vehicle can perform first OTA update on the first component in the vehicle based on the obtained first update task. After the first OTA update on the first component fails, the vehicle can further perform second OTA update on the first component based on the second update condition, to repair and update the first component.

An embodiment of this application further provides an electronic device. The electronic device may include a memory and one or more processors. The memory is coupled to the processor. The memory is configured to store computer program code. The computer program code includes computer instructions. When the processor executes the computer instructions, the electronic device may perform functions or steps performed by the vehicle in the foregoing method embodiments, or the electronic device may perform functions or steps performed by the OTA server in the foregoing method embodiments. Certainly, the electronic device includes but is not limited to the memory, and the one or more processors. For example, for a structure of the electronic device, refer to the structure of the vehicle and the structure of the OTA server shown in FIG. 3A and FIG. 3B.

An embodiment of this application further provides a chip system. The chip system may be used in the electronic device in the foregoing embodiment. As shown in FIG. 19, the chip system includes at least one processor 501 and at least one interface circuit 502. The processor 501 may be a processor in the foregoing electronic device. The processor 501 and the interface circuit 502 may be connected to each other through a line. The processor 501 may receive computer instructions from a memory of the electronic device through the interface circuit 502, and execute the computer instructions. When the computer instructions are executed by the processor 501, the electronic device may be enabled to perform steps performed by the vehicle in the foregoing embodiments, or the electronic device may be enabled to perform steps performed by the OTA server in the foregoing embodiments. Certainly, the chip system may further include another discrete device. This is not specifically limited in embodiments of this application.

An embodiment of this application further provides a computer-readable storage medium, configured to store computer instructions run by the electronic device.

An embodiment of this application further provides a computer program product, including computer instructions run by the electronic device.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiment of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In various embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment. The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An update method, wherein the method comprises:
obtaining a first update task, wherein the first update task comprises a first update package, and the first update package is used for over the air OTA update on a first component of a first device;
when the first device meets a first update condition, performing first OTA update on the first component based on the first update package, wherein the first update condition comprises at least a condition associated with the first component;
when the first OTA update fails, determining whether the first device meets a second update condition, wherein the second update condition does not comprise a condition associated with the first component and/or a second component, and the second component is a component that causes the first OTA update to fail; and
when the first device meets the second update condition, performing second OTA update on the first component based on a second update package, wherein the second update package is associated with the first update package.

2. The method according to claim 1, wherein after the first OTA update fails and before the second OTA update is performed, the method further comprises at least one of the following:
skipping performing detection on the first component;
skipping performing detection on the second component;
performing detection on the first component and ignoring a detection result obtained by performing detection on the first component; and
performing detection on the second component and ignoring a detection result obtained by performing detection on the second component.

3. The method according to claim 1 or 2, wherein after the first OTA update fails, the method further comprises:
obtaining first indication information, wherein the first indication information indicates to perform the second OTA update based on the second update condition.

4. The method according to any one of claims 1 to 3, wherein the second update condition is determined based on status information of the first component and/or the second component, and the status information of the first component and/or the second component is associated with failure of the first OTA update.

5. The method according to any one of claims 1 to 4, wherein after the first OTA update fails and before the second OTA update is performed, the method further comprises:
waking up a third component, wherein the third component comprises at least a component associated with performing the second OTA update on the first component.

6. The method according to claim 5, wherein the waking up a third component comprises:
receiving a wake-up instruction, wherein the wake-up instruction is used to wake up the third component; and
waking up the third component in response to the wake-up instruction.

7. The method according to claim 6, wherein the wake-up instruction is determined based on status information of the third component.

8. The method according to any one of claims 1 to 7, wherein an update type corresponding to the second OTA update is forcible update.

9. An update method, wherein the method comprises:
sending a first update task, wherein the first update task comprises a first update package, and the first update package is used to perform OTA update on a first component of a first device; and
when the first device fails to perform first OTA update on the first component based on the first update package, sending first indication information, wherein the first indication information indicates the first device to perform second OTA update based on a second update condition, the second update condition does not comprise a condition associated with the first component and/or a second component, the second component is a component that causes the first OTA update to fail, the second OTA update is to perform update on the first component based on a second update package, and the second update package is associated with the first update package.

10. The method according to claim 9, wherein that the first device performs the second OTA update based on the second update condition comprises at least one of the following:
skipping performing detection on the first component;
skipping performing detection on the second component;
performing detection on the first component and ignoring a detection result obtained by performing detection on the first component; and
performing detection on the second component and ignoring a detection result obtained by performing detection on the second component.

11. The method according to claim 9 or 10, wherein before the sending first indication information, the method further comprises:
obtaining status information of the first component and/or the second component, wherein the status information of the first component and/or the second component is associated with failure of the first OTA update; and
determining the second update condition based on the status information of the first component and/or the second component.

12. The method according to claim 11, wherein the obtaining status information of the first component and/or the second component comprises:
receiving one or more of log information of the first OTA update and user feedback information; and
determining the status information of the first component and/or the second component based on one or more of the log information and the user feedback information.

13. The method according to any one of claims 9 to 12, wherein after the first OTA update fails and before the second OTA update is performed, the method further comprises:
sending a wake-up instruction, wherein the wake-up instruction is used to wake up a third component, and the third component comprises at least a component associated with performing the second OTA update on the first component.

14. The method according to claim 13, wherein before the sending a wake-up instruction, the method further comprises:
obtaining status information of the third component; and
determining the wake-up instruction based on the status information of the third component.

15. The method according to claim 14, wherein the obtaining status information of the third component comprises:
receiving one or more of the log information of the first OTA update and the user feedback information; and
determining the status information of the third component based on one or more of the log information and the user feedback information.

16. The method according to any one of claims 9 to 15, wherein an update type corresponding to the second OTA update is forcible update.

17. An update method, wherein the method comprises:
sending first prompt information, wherein the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition comprises at least a condition associated with the first component, the second update condition does not comprise a condition associated with the first component and/or a second component, and the second component is a component that causes the first OTA update to fail;
receiving first response information from the user, wherein the first response information indicates whether the user accepts the second update condition; and
when the user accepts the second update condition, after the first OTA update fails, performing the second OTA update on the first component based on the second update condition.

18. The method according to claim 17, wherein after the first OTA update fails, the method further comprises:
sending second prompt information, wherein the second prompt information is used to query the user whether to accept the performing the second OTA update on the first component based on the second update condition;
receiving second response information from the user, wherein the second response information indicates whether the user accepts the performing the second OTA update on the first component based on the second update condition; and
when the user accepts the performing the second OTA update on the first component based on the second update condition, performing the second OTA update on the first component based on the second update condition.

19. The method according to claim 18, wherein after the first OTA update fails, the method further comprises:
obtaining location information of the first device;
when a first distance is greater than a first threshold, sending the second prompt information, wherein the second prompt information is used to query the user whether to accept the performing the second OTA update on the first component based on the second update condition, the first distance is associated with the location information, the first distance is a distance between the first device and an OTA update center, and the OTA update center is configured to perform the second OTA update on the first component;
receiving the second response information from the user, wherein the second response information indicates whether the user accepts the performing the second OTA update on the first component based on the second update condition; and
when the user accepts the performing the second OTA update on the first component based on the second update condition, performing the second OTA update on the first component based on the second update condition.

20. The method according to any one of claims 17 to 19, wherein after the first OTA update fails, the method further comprises:
obtaining first indication information, wherein the first indication information indicates to perform the second OTA update based on the second update condition.

21. The method according to any one of claims 17 to 20, wherein the performing the second OTA update on the first component based on the second update condition comprises:
when the first device meets the second update condition, performing the second OTA update on the first component based on a second update package, wherein the second update package is associated with the first update package.

22. An update method, wherein the method comprises:
receiving and displaying first prompt information, wherein the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition comprises at least a condition associated with the first component, the second update condition does not comprise a condition associated with the first component and/or a second component, and the second component is a component that causes the first OTA update to fail;
receiving first response information from the user, wherein the first response information indicates whether the user accepts the second update condition; and
when the user accepts the second update condition, after the first OTA update fails, performing the second OTA update on the first component based on the second update condition.

23. The method according to claim 22, wherein after the first OTA update fails, the method further comprises:
receiving and displaying second prompt information, wherein the second prompt information is used to query the user whether to accept the performing the second OTA update on the first component based on the second update condition;
receiving second response information from the user, wherein the second response information indicates whether the user accepts the performing the second OTA update on the first component based on the second update condition; and
when the user accepts the performing the second OTA update on the first component based on the second update condition, performing the second OTA update on the first component based on the second update condition.

24. The method according to claim 22, wherein after the first OTA update fails, the method further comprises:
obtaining location information of the first device;
when a first distance is greater than a first threshold, receiving and displaying second prompt information, wherein the second prompt information is used to query the user whether to accept the performing the second OTA update on the first component based on the second update condition, the first distance is associated with the location information, the first distance is a distance between the first device and an OTA update center, and the OTA update center is configured to perform the second OTA update on the first component;
receiving second response information from the user, wherein the second response information indicates whether the user accepts the performing the second OTA update on the first component based on the second update condition; and
when the user accepts the performing the second OTA update on the first component based on the second update condition, performing the second OTA update on the first component based on the second update condition.

25. An update method, wherein the method comprises:
sending first prompt information, wherein the first indication information is used to query a user who uses a first device whether to accept a second update condition, the second update condition is a condition of second OTA update, the second OTA update is update performed after first OTA update fails, the first OTA update is update performed on a first component of the first device based on a first update package when the first device meets a first update condition, the first update condition comprises at least a condition associated with the first component, the second update condition does not comprise a condition associated with the first component and/or a second component, and the second component is a component that causes the first OTA update to fail; and
when the user accepts the second update condition, sending first indication information after the first OTA update fails, wherein the first indication information indicates the first device to perform the second OTA update based on the second update condition.

26. The method according to claim 25, wherein after the first OTA update fails and before the sending first indication information, the method further comprises:
sending second prompt information, wherein the second prompt information is used to query the user whether to accept performing the second OTA update on the first component based on the second update condition.

27. An update apparatus, wherein the apparatus comprises an obtaining module and a processing module, wherein
the obtaining module is configured to obtain a first update task, wherein the first update task comprises a first update package, and the first update package is used for over the air OTA update on a first component of a first device;
the processing module is configured to: when the first device meets a first update condition, perform first OTA update on the first component based on the first update package, wherein the first update condition comprises at least a condition associated with the first component;
the processing module is further configured to: when the first OTA update fails, determine whether the first device meets a second update condition, wherein the second update condition does not comprise a condition associated with the first component and/or a second component, and the second component is a component that causes the first OTA update to fail; and
the processing module is further configured to: when the first device meets the second update condition, perform second OTA update on the first component based on a second update package, wherein the second update package is associated with the first update package.

28. The apparatus according to claim 27, wherein after the first OTA update fails, the obtaining module is further configured to:
obtain first indication information, wherein the first indication information indicates to perform the second OTA update based on the second update condition.

29. An update apparatus, wherein the apparatus comprises a sending module;
the sending module is configured to send a first update task, wherein the first update task comprises a first update package, and the first update package is used to perform OTA update on a first component of a first device; and
the sending module is further configured to: when the first device fails to perform first OTA update on the first component based on the first update package, send first indication information, wherein the first indication information indicates the first device to perform second OTA update based on a second update condition, the second update condition does not comprise a condition associated with the first component and/or a second component, the second component is a component that causes the first OTA update to fail, the second OTA update is to perform update on the first component based on a second update package, and the second update package is associated with the first update package.

30. The apparatus according to claim 29, wherein the apparatus further comprises an obtaining module and a processing module, wherein
the obtaining module is configured to obtain status information of the first component and/or the second component, wherein the status information of the first component and/or the second component is associated with failure of the first OTA update; and
the processing module is configured to determine the second update condition based on the status information of the first component and/or the second component.

31. A vehicle, comprising an update apparatus, wherein the update apparatus is configured to perform the method according to any one of claims 1 to 8, or perform the method according to any one of claims 17 to 21, or perform the method according to any one of claims 22 to 24.

32. An electronic device, comprising a memory and one or more processors, wherein the memory is coupled to the processor; the memory stores computer program code, the computer program code comprises computer instructions, and when the computer instructions are executed by the processor, the electronic device is enabled to perform the method according to any one of claims 1 to 8, or the electronic device is enabled to perform the method according to any one of claims 9 to 16, or the electronic device is enabled to perform the method according to any one of claims 17 to 21, or the electronic device is enabled to perform the method according to any one of claims 22 to 24, or the electronic device is enabled to perform the method according to claim 25 or 26.

33. A computer-readable storage medium, comprising computer instructions, wherein when the computer instructions are run on an electronic device, the electronic device is enabled to perform the method according to any one of claims 1 to 8, or the electronic device is enabled to perform the method according to any one of claims 9 to 16, or the electronic device is enabled to perform the method according to any one of claims 17 to 21, or the electronic device is enabled to perform the method according to any one of claims 22 to 24, or the electronic device is enabled to perform the method according to claim 25 or 26.
